# EUROPEAN PATENT SPECIFICATION

(11) **EP 3 514 983 B1**
(45) Date of publication and mention of the grant of the patent: **20.12.2023**
(21) Application number: 17862281.7
(22) Date of filing: 20.10.2017
(51) Int. Cl.: H04B 7/155, H04W 88/08, H04L 5/00, H04B 7/06, H04B 1/03, H01Q 1/12, H01Q 1/24, H01Q 1/44

(54) **CONFIGURABLE POLE-TYPE BASE STATION**
KONFIGURIERBARE MASTARTIGE BASISSTATION
STATION DE BASE DE TYPE POTEAU CONFIGURABLE

(30) Priority: 20.10.2016 KR 20160136924
(43) Date of publication of application: 24.07.2019
(73) Proprietor: Samsung Electronics Co., Ltd., Suwon-si, Gyeonggi-do 16677 (KR)
(72) Inventor: LEE, Youngkwun, Gyeonggi-do, 16677 (KR); KIM, Woojune, Gyeonggi-do, 16677 (KR); MOON, Byoungchul, Gyeonggi-do, 16677 (KR); PARK, Seongyong, Gyeonggi-do, 16677 (KR); SHIN, Jongkyun, Gyeonggi-do, 16677 (KR)
(74) Representative: Gulde & Partner
(86) International application number: PCT/KR2017/011692
(87) International publication number: WO 2018/074899

(56) References cited:
- EP-A1- 3 033 805
- KR-A- 20160 033 568
- US-A- 5 963 178
- US-A- 5 995 063
- US-A1- 2012 256 810
- US-A1- 2015 057 047
- US-A1- 2015 349 399
- US-A1- 2015 380 806
- US-A1- 2016 198 523

## Description

### [Technical Field]

The disclosure relates to a configurable pole-type base station, and more particularly, to a pole-type base station having a structure that is easily changeable and conveniently maintainable, and a structure including the pole-type base station.

### [Background Art]

Efforts are underway to develop an improved 5G communication system or a pre-5G communication system in order to meet a growing demand for wireless data traffic after commercialization of the 4G communication system. Due to this, the 5G communication system or the pre-5G communication system is referred to as a "beyond 4G network communication system" or a "post-LTE system".

In order to achieve a high data transmission rate, it is considered to implement the 5G communication system in an ultra-high frequency (mmWave) band (e.g., a 28 GHz band or a 39 GHz band) and a band not higher than 6 GHz. In order to mitigate a path loss of radio waves and to increase a transmission distance of radio waves in the ultra-high frequency band, beam-forming technology, massive multi-input multi-output (MIMO) technology, full dimensional MIMO (FD-MIMO) technology, array antenna technology, analog beam-forming technology, and large-scale antenna technology are being discussed for the 5G communication system.

In addition, in order to improve a system network, evolved small cell technology, advanced small cell technology, cloud radio access network (RAN) technology, ultra-dense network technology, device to device (D2D) communication technology, wireless backhaul technology, moving network technology, cooperative communication technology, coordinated multi-point (CoMP), reception interference cancellation technology, and the like are being developed for the 5G communication system.

In addition, advanced coding modulation (ACM) methods, such as hybrid FSK and QAM modulation (FQAM) and sliding window superposition coding (SWSC), and advanced connection technologies, such as filter bank multi carrier (FBMC), non-orthogonal multiple access (NOMA), and sparse code Multiple Access (SCMA), are being developed for the 5G system.

Meanwhile, as wireless communication systems develop, a densification operation is performed in which more base stations are installed in the same area in order to expand the coverage and improve the quality. For example, the installation of a small-cell architecture has increased, compared with the installation of a conventional macro-cell site.

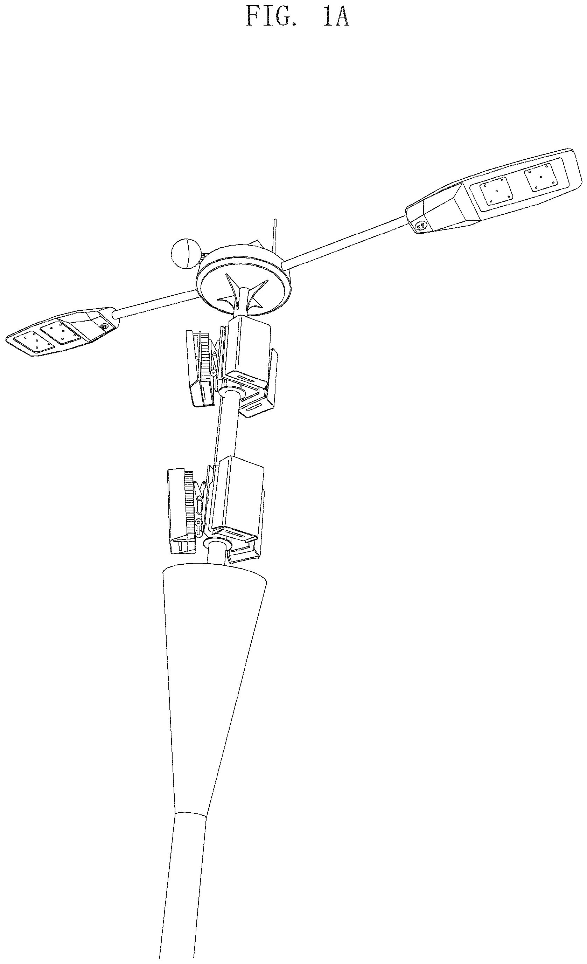

As an example of an installation method of a small-cell architecture, as illustrated in FIG. 1A, a method of installing devices such as a remote radio head (RRH) and an antenna on the upper end of a light pole, a utility pole, or the like may be used as a conventional small-cell architecture. Since such a method is able to use an existing light pole, a utility pole, a building, or the like, it is possible to more easily install a device necessary for a small-cell architecture.

However, when the small-cell architecture illustrated in FIG. 1A is installed near a residential area, the installation is often met with opposition from nearby residents due to the damage to aesthetics, the influence of electromagnetic waves of human bodies, and the like.

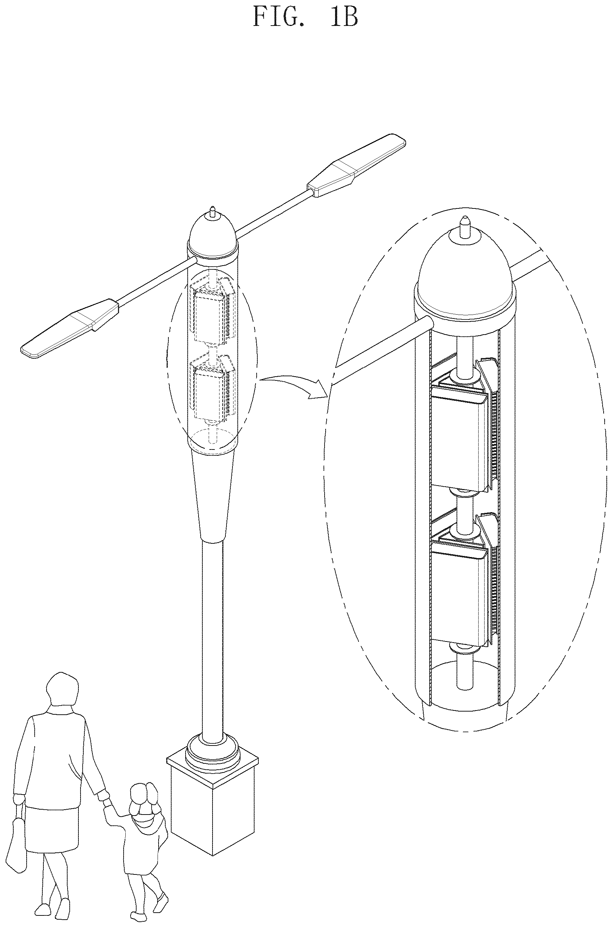

Therefore, as illustrated in FIG. 1B, a method of installing a small-cell architecture in a column of a light pole or a utility pole has been devised. Specifically, it is a method of enhancing aesthetic effect by attaching a radio unit (RU) or a digital unit (DU) including an RRH and an antenna to a support of a light pole or a utility pole, and covering the RU or the DU with a cover or a case.

However, in the case in which a component in the small-cell architecture implemented as illustrated in FIG. 1B is changed due to a service frequency band change, or in the case in which the small-cell architecture itself is maintained, there is a problem in that it is necessary to disassemble a light pole, a utility pole, or the like.

For example, it is necessary to open and close the cover in order to change or to maintain the components contained in the cover that forms the outer wall of the structure. At this time, it is difficult for a person to open a cover, which is generally located at a high place. In addition, there is a problem in that it is also difficult to transfer components and devices necessary for maintenance or the like to a high position and to reassemble them.

Accordingly, there is a need for a pole-type base station that allows components of the base station to be arbitrarily configured while being used as a general structure of a city such as a light pole or a utility pole.

From US 5 995 063 A an antenna structure is known comprising a hollow antenna mast having an inside and an outside, a movable module with an antenna, and/or a RF module disposed inside the hollow antenna mast, and a lifting mechanism which enables easy maintenance.

### [Disclosure of Invention]

### [Technical Problem]

According to the necessity described above, the disclosure provides a pole-type base station with a convenient maintainable structure, which uses a block-type configuration, so that the configuration can be easily changed and can be effectively cooled.

### [Solution to Problem]

The invention is defined by independent claim 1. Further embodiments are disclosed by the dependent claims.

### [Advantageous Effects of Invention]

According to an embodiment of the disclosure, the outer shape of a pole-type base station can be formed integrally with a structure to give aesthetic beauty. In addition, it is possible to provide a pole-type base station in which communication modules can be easily increased or decreased and can be maintained.

In addition, since each of the wireless modules that perform communication can be mounted on a pole as required, various optional configurations and interlocking operations can be implemented depending on the situation of each site.

### [Brief Description of Drawings]

FIGS. 1A and 1B are views illustrating a base station device coupled to a utility pole or a light pole, according to a general embodiment;
FIGS. 2A and 2B are views each illustrating a light pole to which the configuration of a pole-type base station according to an embodiment of the disclosure is capable of being coupled;
FIGS. 3A to 3E are views for describing a method of coupling components constituting a pole-type base station according to an embodiment of the disclosure;
FIG. 4 is a view illustrating a pole-type base station according to an embodiment of the disclosure and a light pole to which the pole type base station is coupled;
FIGS. 5A to 8E are views for illustrating components of pole-type base stations according to various embodiments of the disclosure and methods of coupling the components;
FIGS. 9A to 9C are views illustrating configurations of pole-type base stations according to various embodiments of the disclosure;
FIGS. 10A to 10C are views each illustrating a configurations of a pole-type base station according to various embodiments of the disclosure;
FIG. 11 is a view illustrating a pole-type base station coupled in a screw-on manner, according to an embodiment of the disclosure; and
FIGS. 12 and 13 are block diagrams each illustrating the structure of a pole-type base station according to an embodiment of the disclosure.

### [Mode for the Invention]

Hereinafter, embodiments of the disclosure will be described in detail with reference to the accompanying drawings.

In describing the exemplary embodiments of the disclosure, descriptions related to technical contents which are well-known in the art to which the disclosure pertains, and are not directly associated with the disclosure, will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Further, the size of each element does not entirely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Here, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

And each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, "unit", or "module" or divided into a larger number of elements, "unit", or "module". Moreover, the elements and "units" may be implemented to reproduce one or more CPUs within a device or a security multimedia card.

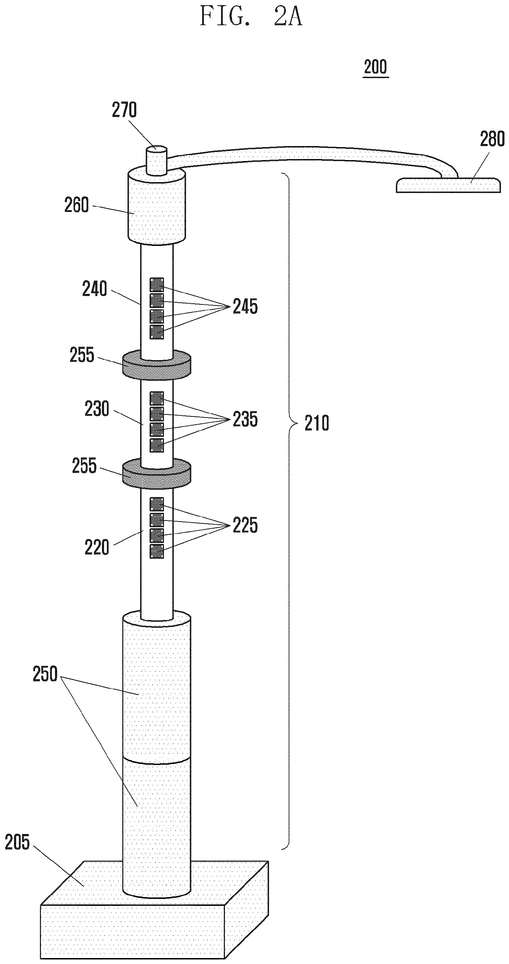

FIG. 2A is a view illustrating a pole-type base station 200 according to an embodiment of the disclosure. The pole-type base station 200 may be coupled to structures such as a light pole, a utility pole, and a building. The structures may include various structures such as a traffic light, a traffic sign, a road sign, and a clock tower, in addition to the light pole and the utility pole.

The pole-type base station 200 may mean a base station including a digital unit configured to process signals in a baseband, a remote radio head (RRH) configured to convert signals processed in the baseband into signals in a communication band, and an antenna.

First, the pole-type base station 200 may include a lower end portion 205 located at the lowermost end. For example, the pole-type base station 200 may include a relatively heavy lower end portion 205 in order to mount the pole on the ground, a building, or the like. The lower end portion 205 generally serves to fix the pole to the ground. Thus, the lower end portion 205 may include components of the base station that are essentially necessary and may not be frequently replaced.

For example, the lower end portion 205 may include a power supplyincluding a rectifier. The rectifier is an element or device that performs a rectifying operation to obtain DC power from AC power, and is able to perform a function of passing current in only one direction.

The power supply is a device for supplying power to the pole-type base station 200. The power supply may supply power to all of a communication module, a light-emitting unit 280, and the like, which are capable of being coupled to a support 210 of the pole-type base station 200. For example, the power supply may supply power to the communication module through at least one connector among one or more connectors.

The lower end portion 205 includes a fan. The fan is a component for allowing heat to be dissipated through an air flow path to the light emitting portion 280 through the support 210.

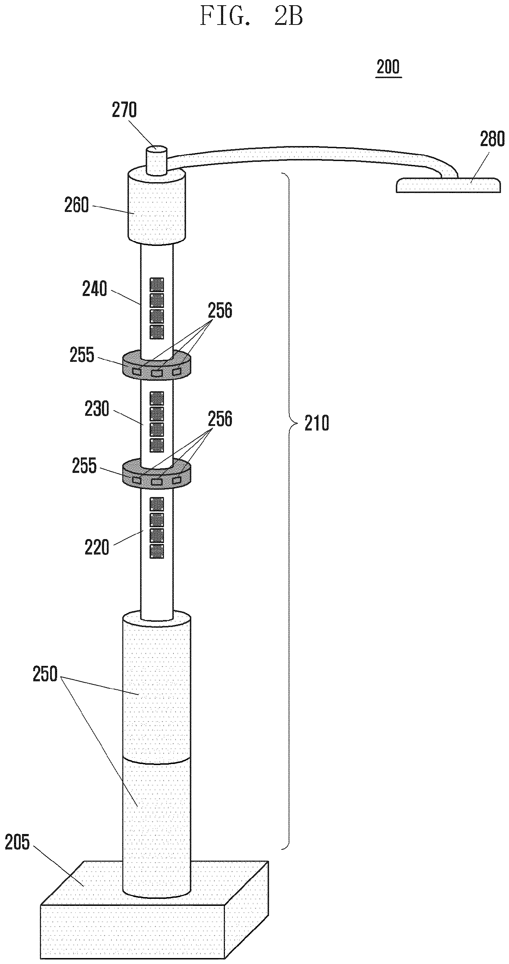

Specifically, the support 210 may be a hollow pole having a central hollow portion. Therefore, the central hollow space may serve as an air flow path. The air generated using the fan may cause heat of the pole-type base station 200 to be emitted through the air flow path. For example, as illustrated in FIG. 2B, an intermediate support module 255 of the pole-type base station 200 may include one or more holes 256. Accordingly, the air moved through the air flow path may be discharged through the holes 256. Alternatively, a cooling pin may be included in the middle of the support 210 to dissipate heat.

Referring back to FIG. 2A again, the lower end portion 205 may further include a communication connection device (not illustrated) that connects the communication module and a backhaul such that the communication module is capable of communicating with the backhaul through another connector among the one or more connectors. The communication connection device may further include a switch, a router, a hub, and the like. The configuration in which the lower end portion 205 includes a power supply unit, a fan, and a communication connection device is merely an embodiment, and the lower end portion 205 may include different components depending on the function and structure of the pole-type base station 200.

The pole-type base station 200 may include a support 210 capable of being coupled to at least one communication module that constitutes the base station. The support 210 may include a lower support module 250 and an intermediate support module 255.

The lower support module 250 may be located above the lower end 205, and may be located above or below the at least one communication module. The lower support module 250 may be integrated with the support 210, but may be a dummy module detachable from the support 210.

If the communication module is mounted on the support 210, the intermediate support module 255 is able to support the state in which the communication module is mounted on the support. The position of the intermediate support module 255 is changeable depending on the height of the pole-type base station.

Meanwhile, the intermediate support module 255 may be omitted. In addition, as described above, the intermediate support module 255 may include at least one hole 256 for heat dissipation.

The communication module may be constituted with a DU, an RRH, an antenna, and the like. In this case, the communication module may be configured in various combinations according to various embodiments.

According to an embodiment, the antenna for radiating radio waves is located at the uppermost end of the support, the RRH is located at the middle of the support, and the DU is located at the lowermost end of the support.

According to the embodiment, if a plurality of RRHs are provided, the RRHs may manage sectors of different frequency bands, respectively, may have separate DUs, respectively, and may commonly use one antenna. In this case, the antenna may be an omni-antenna.

Meanwhile, the RRHs may be connected to corresponding DUs, respectively.

According to another embodiment, the antenna and the RRHs constitute one wireless communication module, and the DUs may be located at the lowermost end of the support. In this case, a plurality of the wireless communication modules may be provided. For example, in the case in which three wireless communication modules are provided, each of the wireless communication modules may include a directional antenna having directivity. Then, each of the wireless communication modules may perform communication in a predetermined direction.

Meanwhile, the wireless communication modules may be connected to corresponding DUs, respectively.

Each of the communication modules may have an arbitrary shape, may perform communication according to at least one communication type, and may be mounted at an arbitrary position of the support 210 to be connected to the at least one connector.

Specifically, the support 210 may be divided into a plurality of mounting positions 220, 230, and 450 at which the plurality of communication modules may be mounted, respectively. The plurality of mounting positions 220, 230, and 450 may be divided by one or more intermediate supporting modules 255.

The plurality of mounting positions 220, 230, and 450 may have sections, which may be divided depending on the functions of the communication modules capable of being coupled thereto. For example, a communication module for performing communication according to first communication type may be mounted at the first mounting position 220, and a communication module for performing communication according to second communication type may be mounted at the second mounting position 230. The antenna module may be mounted at the third mounting position 240 located at the uppermost end. The first communication type and the second communication type may be a 3G communication type such as WCDMA and a 4G or 5G communication system such as long-term evolution (LTE).

Meanwhile, among the plurality of mounting positions 220, 230, and 450, an access unit (AU) module for performing communication by at least one communication type may be mounted at the first mounting position 220. The AU is a component for performing a radio signal transmission/reception function, a modulation/demodulation function for packet traffic, and a hybrid automatic repeat request (HARQ) or ARQ processing function. For example, a 5G AU module may exist between a terminal and a core unit (CU), and may be wirelessly connected to a customer premises equipment (CPE) to process a packet call according to the 5G air standard. Alternatively, a digital unit (DU) module for performing communication by at least one communication type may be coupled to the first mounting position 220. The DU is a component for processing a signal in a base band region.

In addition, a remote radio head (RRH) device for communicating by at least one communication type may be mounted at the second mounting position 230. The RRH is a component including a radio frequency network, an analog-digital/digital-analog converter, and an up/down converter to process signals in a radio transmission/reception band.

In addition, an antenna module according to at least one communication type may be mounted at the third mounting position 240. If the communication module includes three sub-communication modules, a three-sector antenna module may be mounted at the third mounting position 240. The sector antenna modules may enable data transmission/reception in all directions.

The communication module may include a plurality of sub-communication modules. For example, the communication module may be divided into three sectors, and may include two 4G antenna modules and one 5G antenna module as sub-communication modules.

If the communication module uses an external-type antenna, the antenna module may be included at a position different from that of the communication module (e.g., the third mounting position 240). However, in the case in which an internal-type sector antenna is used, the sector antenna may be included in the communication modules. For example, a 5G RU may include an antenna element. Therefore, if the 5G RU is installed as a sub-communication module, an antenna module corresponding to the 5G may not be mounted.

In addition, the antenna modules of the three sectors may not be the antenna modules of the same communication type. For example, the three sectors constituting the sector antennas may be 4G or 5G antennas, or one sector may be a 5G antenna and the remaining two sectors may be a 4G antenna.

Meanwhile, the 5G AU is an integrated type in which an RU and an antenna are coupled to each other. Accordingly, the 5G AU may not require a separate antenna. Accordingly, the antenna module may be additionally installed only when the communication module is a 4G (micro RRH or small cell) module.

In the case of the 4G communication type, both of an antenna-integrated type and an antenna-separated type may exist. Accordingly, in the case of the antenna-separated type, it may be necessary to install a separate antenna according to the 4G communication type. Therefore, an antenna module connected to the 4G communication module may be mounted.

In contrast, in the case in which the antenna-integrated type is assembled to the 4G communication module, it is not necessary to provide a separate antenna module connected to the corresponding RU. In addition, in the case of the 4G communication type, one antenna may be provided in the integrated type, and two antennas may be mounted in the separated types. For example, as the separate antenna module, a directional antenna module may be mounted. If the separate antenna module is not a directional antenna but an omni-antenna, it may be mounted at the upper end of the support.

Meanwhile, FIG. 2A illustrates that the support 210 is divided into three mounting positions 220, 230, and 240, but the number of the mounting positions is not limited thereto. For example, a pole-type base station included in a light pole or a utility pole having a long pole length may be divided into a larger number of mounting positions. Alternatively, in the case of a light pole or a utility pole communication module having a large pole thickness, it is possible to divided one mounting position into a plurality of sectors so as to couple communication modules thereto. Thus, the number of mounting positions may be smaller than three.

Alternatively, the support 210 may be divided into as many mounting positions as possible. For example, all the portions from the upper portion of the lower end portion 205 to the lower portion of the light-emitting portion 280 may be configured as the mounting positions. In this case, a dummy module that does not perform any function may be mounted at a mounting position. Therefore, when necessary, the dummy module of the mounting position is removed, and a communication module may be mounted. For example, as described above, the lower support module 250 may be a dummy module. If more communication modules are required to be mounted on the support 210 in accordance with an embodiment or while performing a maintenance operation, the lower support module 250, which is the dummy module, may be removed, and a communication module may additionally be mounted.

Intermediate support modules 255 may be included at the boundaries between the plurality of mounting positions 220, 230, and 240, respectively. The intermediate support modules 255 may support communication modules, which are coupled to the mounting positions 220, 230, and 240, respectively.

In addition, the intermediate support modules 255 may be changed in position. For example, depending on the length of the communication modules to be coupled, the positions of the intermediate support modules 255 may be movable. According to an embodiment, the intermediate support modules 255 may be omitted.

Meanwhile, the support 210 may include one or more connectors 225, 235, and 245. A communication module mounted on the support 210 may be powered via any one of the one or more connectors. In addition, the communication module may communicate with a backhaul through another connector of the one or more connectors. For example, the one or more connectors 225, 235, and 245 may be connected to a power supply unit, a backhaul, and the like included in the lower end portion 205 through a cable or an optical cable. Accordingly, when a communication module is coupled to the support 210, the communication module is supplied with power and communicates with the backhaul through the connectors 225, 235, and 245.

Meanwhile, using the connectors 225, 235, and 245 and a cable connected to the connectors, 4G and 5G may share a backhaul. In order to share the backhaul, a daisy chain may be used.

According to another embodiment of the disclosure, the pole-type base station 200 may further include a wireless backhaul 260. At this time, the communication module may perform communication with the backhaul in a wireless manner.

The outside of the support 210 may include a structure to be coupled with the communication module. For example, the surface of the support 210 may include a plurality of protrusions. Accordingly, the communication modules coupled to the support 210 may have structures having grooves at the positions corresponding to the protrusions.

Alternatively, the support 210 may include protruding connectors 225, 235, and 245. At this time, the communication modules coupled to the support 210 may include grooves at positions corresponding to the protrusions, and the grooves may have structures formed therein to be in contact with the connectors 225, 235, and 245.

The pole-type base station 200 may further include a GPS antenna 270. The GPS antenna 270 is a component required for clock synchronization of entire 4G and 5G communication systems. An antenna may be required for GPS clock synchronization and reception. However, this is merely an example, and the antenna may be omitted depending on the use and structure of the pole-type base station 200.

If the pole-type base station 200 is a light pole, it may further include a light-emitting portion 280, as illustrated in FIG. 2. Alternatively, in the case in which the pole-type base station 200 is a utility pole, it may further include a structure for connection with a wire or a communication line.

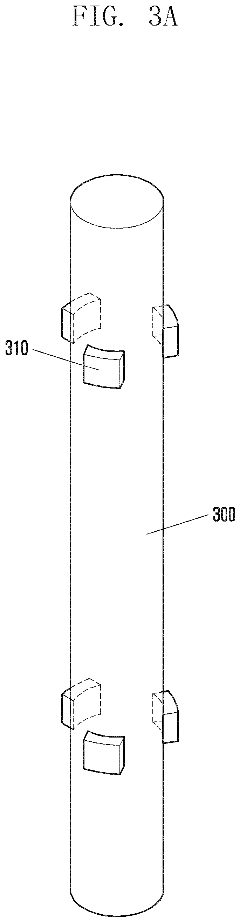

FIGS. 3A to 3E are views for describing a method of coupling components constituting a pole-type base station according to an embodiment of the disclosure.

First, FIG. 3A is a view illustrating a part of a support 300 of the pole-type base station 200. A communication module or a lower/middle support module may be mounted on the support 300.

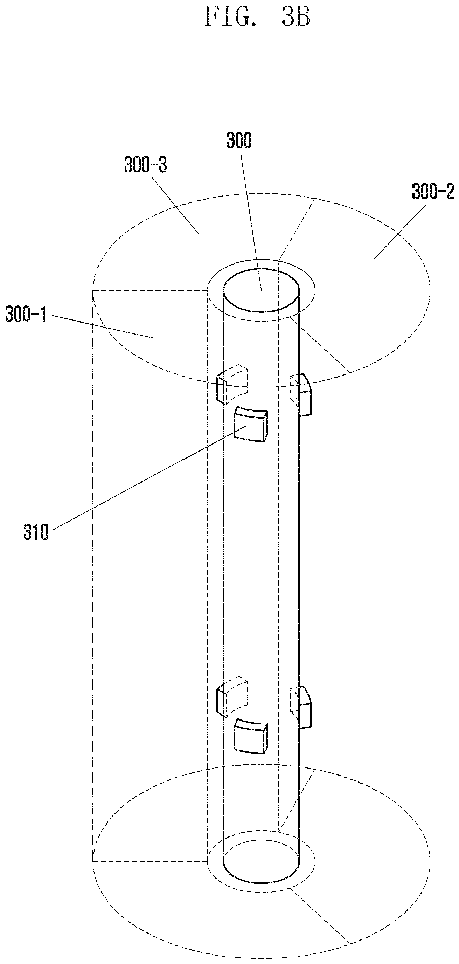

The support 300 may include protrusions 310 for mounting different communication modules. For example, as illustrated in FIG. 3B, the protrusions 310 may be located, so that the respective communication modules can be mounted in the three directions 300-1, 300-2, and 300-3 around the support 300.

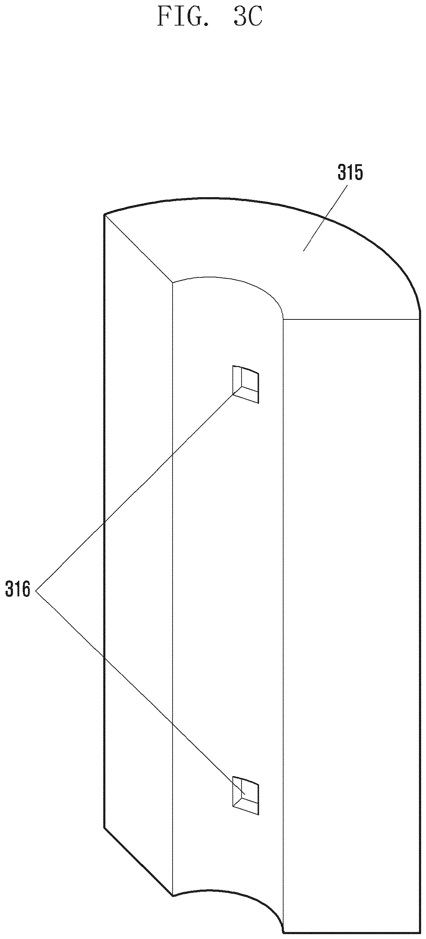

FIG. 3C is a view illustrating an arbitrary sub-communication module 315 constituting a communication module according to an embodiment. As described above, the sub-communication module 315 may be any one of an AU, an RRH module, an RU, a DU, and an antenna module according to an arbitrary communication type. The plurality of communication modules may be respectively installed at installation positions divided for a 5G module, a 4G module, and an antenna three-section module. For example, the antenna three-section module may mean that the antenna communication module includes three sub-communication modules mounted in three directions.

In general, the one communication module may include the same type of sub-communication modules. For example, the antenna communication module may include three antenna sub-communication modules. However, this is merely an embodiment, and if necessary, one communication module may include different types of sub-communication modules. At this time, the sub-communication modules may be installed after replacing connectors suitable for the sub-communication modules.

The sub-communication modules 315 may include a circuit, a wire, an element, or the like on the inner or outer side thereof depending on the functions thereof. The housings of the sub-communication modules 315 may be configured to be integrated with the outside of the support 300. The outer side of the pole-type base station 200 may be formed by mounting the sub-communication modules 315 on the support 300 in three directions.

Specifically, in the case in which the communication modules are mounted in three directions 300-1, 300-2, and 300-3 around the support 300, each sub-communication module 315 may have a columnar shape having a cross-sectional shape obtained by removing a second fan shape having a central angle of 120 degrees from a first fan shape having a central angle of 120 degrees and a radius larger than that of the second fan. The central angle is not limited to 120 degrees, and may be 120 degrees ± an error within an allowable tolerance range.

The sub-communication module 315 may include at least one groove 316 at a position corresponding to the position of at least one protrusion 310 of the support 300.

Meanwhile, in the case in which a first connector is included in the at least one protrusion 310 of the support 300, the at least one groove 316 may also include a second connector to be connected to the first connector.

In addition, the housing of the sub-communication module 315 may be made of a rigid material so as to be fixed while forming the outer wall of the pole-type base station 200. However, a circuit, a wire, an element, and the like inserted into the housing may be formed of a material. Alternatively, the circuit, wiring, element, and the like may have a shape corresponding to the shape of the housing. Meanwhile, in the case in which an antenna module is included in the sub-communication module 315, the housing may be formed as a radome. The radome may mean a dome-shaped structure for protecting and accommodating a communication antenna.

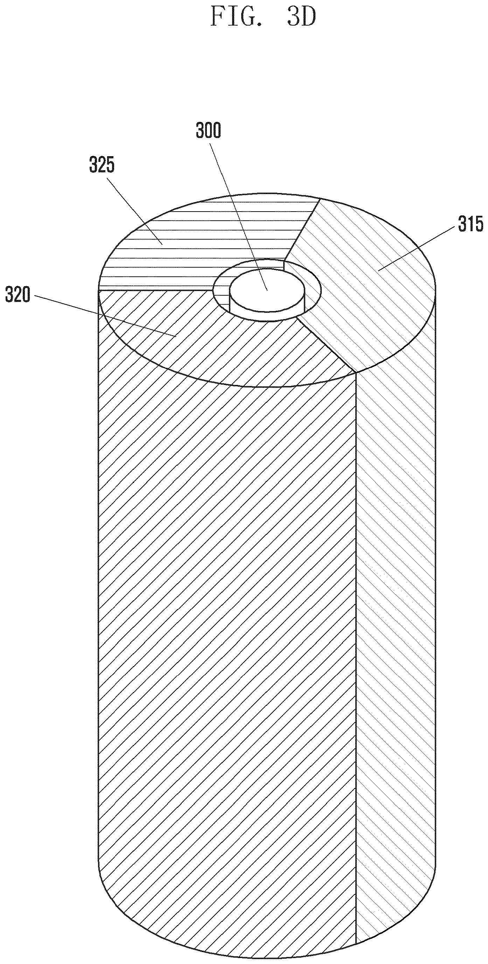

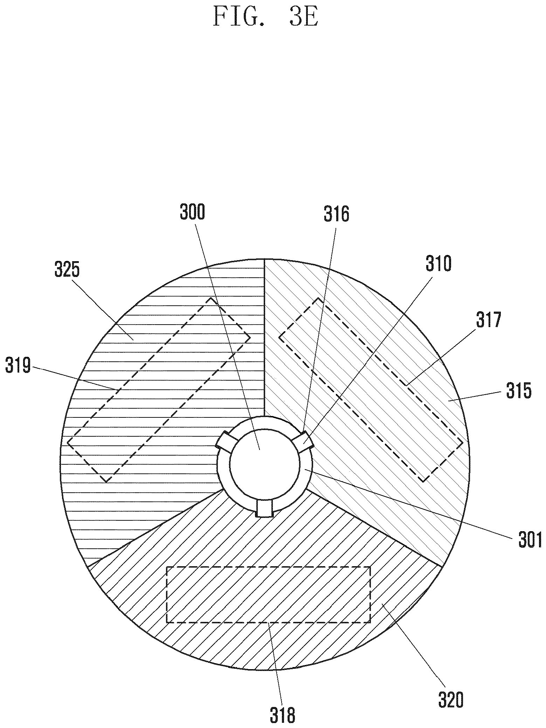

FIG. 3D is a view illustrating the state in which all of the sub-communication modules 320 and 325 having the same shape as the sub-communication module 315 are mounted on the support 300. The plurality of sub-communication modules 315, 320, and 325 may all have the same shape having a central angle of 120 degrees. Accordingly, the plurality of sub-communication modules 315, 320, and 325 are all mounted on the support 300 to configure a communication module. Meanwhile, FIG. 3E is a cross-sectional view illustrating the state in which the sub-communication modules 315, 320, and 325 are mounted on the support 300. An air flow path 301 is formed between the support 300 and the sub-communication modules 315, 320 and 325. For example, the protrusions 310 of the support 300 and the grooves 316 of the sub-communication modules 315, 320, and 325 may be coupled to each other only before the support 300 and the side faces of the sub-communication modules 315, 320, and 325 are brought into contact with each other. The air flow generated using the fan included in the lower end portion is movable through the air flow path 301 generated in this manner. Therefore, the air flow path 301 is able to help the heat dissipation process of the pole-type base station 200.

The air flow path 301 corresponds to the claimed embodiment. In some cases, the protrusions 310 of the support 300 and the grooves 316 of the sub-communication modules 315, 320, and 325 may be coupled to each other until the support 300 and the side faces of the sub-communication modules 315, 320, and 325 are brought into contact with each other. In this case, the support 300 may be hollow. In addition, the heat dissipation process of the pole-type base station 200 may be performed using the hollow space inside the support 300.

A printed circuit board (PCB) 317, 318, or 319 including an actual communication circuit may be mounted on each of the sub-communication modules 315, 320, and 325. FIG. 3E illustrates that the PCBs 317, 318, and 319 are in the form of a rectangular parallelepiped. However, the PCBs 317, 318, and 319 are not limited thereto, and may be implemented in various forms that can be mounted in the sub-communication modules 315, 320, and 325. The PCBs 317, 318, and 319 are connected to a connector to receive power, and may communicate with a backhaul.

The plurality of sub-communication modules 315, 320, and 325 may be mounted on the support 300, and may be fixed by a force applied thereby. According to an additional embodiment, a fastening unit connecting the plurality of sub-communication modules 315, 320, and 325 to each other on the outer sides thereof may be further included. For example, the plurality of sub-communication modules 315, 320, and 325 may be mounted on the support 300, and the outer sides of the housings of the plurality of sub-communication modules 315, 320, and 325 may be further connected to each other.

Meanwhile, at least one of the plurality of sub-communication modules 315, 320, and 325 may be a dummy module. For example, in the case in which only an RRH module and a 4G antenna module are coupled to the support 300, the modules 315 and 320 may be the RRH module and the 4G antenna modules, respectively, and the module 325 may be a dummy module. The dummy module may be changed to another module, such as an RRH module, a 4G antenna module, or a 5G antenna module, depending on a structure change, additional necessity, and the like.

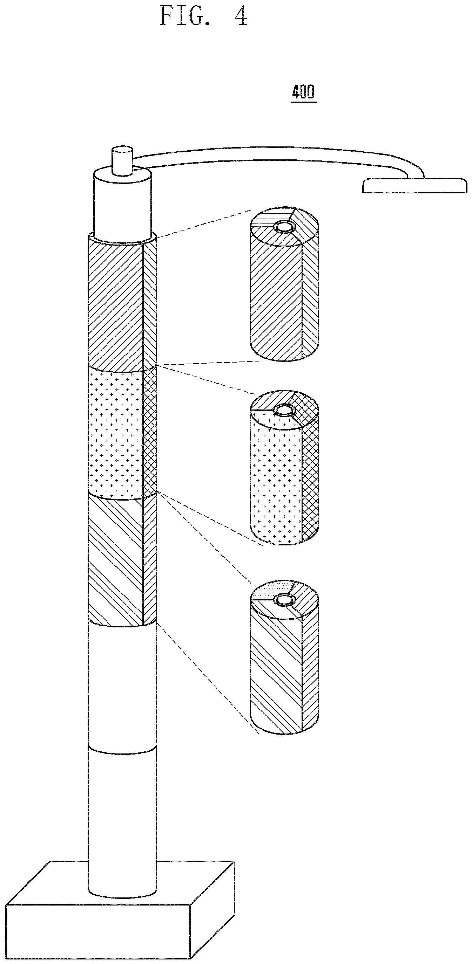

FIG. 4 is a view illustrating a pole-type base station according to an embodiment of the disclosure and a light pole 400 to which the pole-type base station is coupled.

For example, the light pole 400 illustrated in FIG. 4 is divided into three mounting positions by the above-described method, and includes a pole-type base station equipped with communication modules including three sub-communication modules, which are mounted at the three mounting positions, respectively. In this case, an intermediate support module may be included between the communication modules to support the state in which the communication modules are mounted on the support.

The communication modules may be communication modules that perform different functions such as an RRH, an RU, and an antenna module. Alternatively, among the plurality of communication modules, an arbitrary module may be a dummy module that does not perform a function but allows each communication module to be mounted on the support in the state in which the external sides of respective communication modules form an integrated external appearance.

Meanwhile, FIG. 4 illustrates that each communication module includes three sub-communication modules. However, this is merely an embodiment, and the number of sub-communication modules included in any communication module is not limited thereto.

Meanwhile, the shape of the communication module of the poll-type base station 200 may be variously implemented depending on an embodiment. Hereinafter, various types of communication modules will be described.

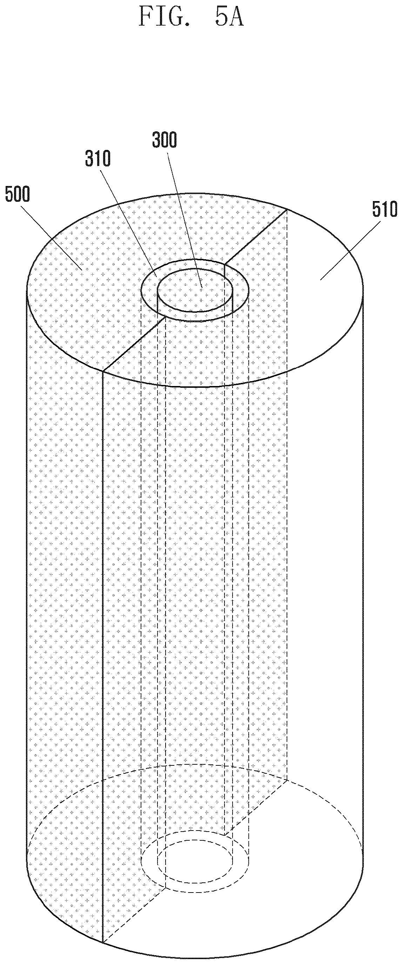

First, FIG. 5A is a view illustrating an embodiment in which a first communication module 500 and a second communication module 510 are mounted on a support 300 according to an embodiment of the disclosure. As described above, the first communication module 500 and the second communication module 510 may be any of an AU, an RRH module, an RU, a DU, and an antenna module according to an arbitrary communication type. The first communication module 500 and the second communication module 510 may include a circuit, a wire, an element, or the like on the inner or outer side thereof depending on the functions thereof. The housings of the first communication module 500 and the second communication module 510 may be configured to be integrated with the outside of the support 300.

Each of the first communication module 500 and the second communication module 510 may have a columnar shape having a cross-sectional shape obtained by removing, from an arbitrary semicircle, a semicircle having a radius smaller than that of the arbitrary semicircle.

One of the first communication module 500 and the second communication module 510 may include a protrusion and the remaining one of the first communication module 500 and the second communication module 510 may include a groove corresponding to the protrusion such that the first communication module 500 and the second communication module 510 are coupled to each other. In addition, the first communication module 500 and the second communication module 510 may include grooves to be coupled to the protrusions 310 of the support 300.

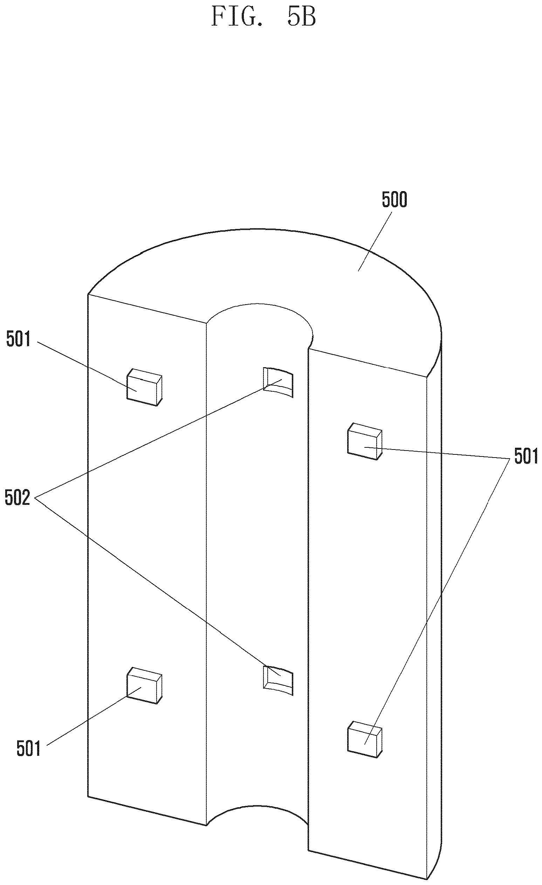

Specifically, FIG. 5B is a view illustrating the first communication module 500. A plurality of protrusions 501 may be included on the surfaces of the first communication module 500 to be in contact with the other communication module. The first communication module 500 may include a plurality of grooves 502 on the central surface thereof to correspond the protrusions 310 of the support 300 in position and shape such that the first communication module 500 is coupled to the support 300.

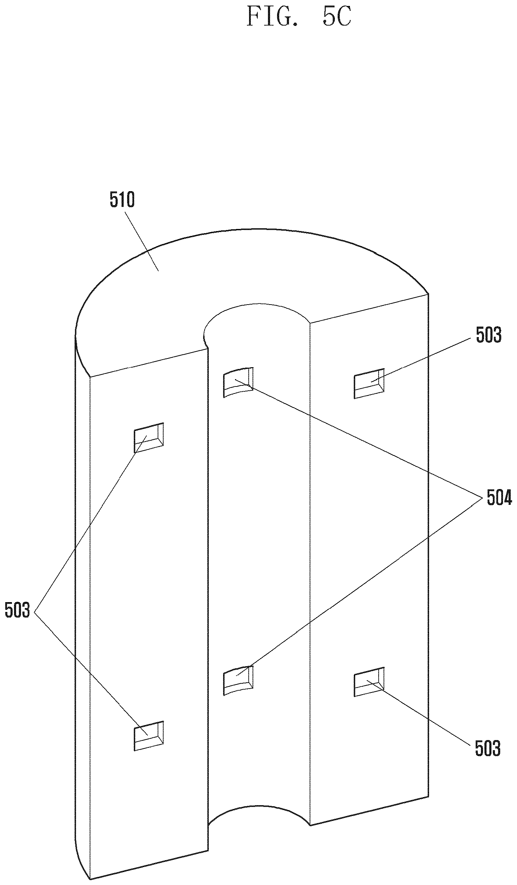

FIG. 5C is a view illustrating the second communication module 510. A plurality of grooves 503 may be included on the surfaces of the second communication module 510 to be in contact with the first communication module 500. The second communication module 510 may include a plurality of grooves 504 on the central surface thereof to correspond the protrusions 310 of the support 300 in position and shape such that the second communication module 510 is coupled to the support 300.

Through the method described above, the first and second communication modules 500 and 510 are coupled to the protrusions 310 on the support 300 and the first and second communication modules 500 and 510, and by the force applied thereby and the coupling force between the protrusions 501 and 503 included in each of the first and second communication modules 500 and 510, the first and second communication modules 500 and 510 can be fixed. According to an additional embodiment, a fastening unit connecting the first and second communication modules 500 and 510 to each other on the outer sides thereof may be further included. For example, the first and second communication modules 500 and 510 may be mounted on the support 300, and the outer sides of the housings of the first and second communication modules 500 and 510 may be further connected to each other.

Meanwhile, in the case in which at least one protrusion 310 of the support 300 includes a connector, the plurality of grooves 502 and 504 formed on the central surfaces of the first and second communication modules 500 and 510 may also include a connector to be connected to the connector of the support 300.

In addition, the housings of the first and second communication modules 500 and 510 may be formed of a rigid material so as to be fixed while forming the outer wall of the pole-type base station 200. However, a circuit, a wire, an element, and the like inserted into the housing may be formed of a material. Alternatively, the circuit, wiring, element, and the like may have a shape corresponding to the shape of the housing.

Meanwhile, the first or second communication module 500 or 510 may be a dummy module. For example, the first or second communication module 500 or 510 may be a dummy module that does not perform any function for the pole-type base station 200 but forms the outer wall of the structure such as a light pole or a utility pole in which the pole-type base station 200 is included. The dummy module may be changed to another module, such as an RRH module, a 4G antenna module, or a 5G antenna module, depending on a structure change, additional necessity, and the like.

In addition, an air flow path 301 may be formed between the support 300 and the first or second communication module 500 or 510. For example, the protrusions 310 of the support 300 and the grooves 502 and 504 in the central surfaces of the first and second communication modules 500 and 510 may be coupled to each other only before the support 300 and the side surfaces of the first and second communication modules 500 and 510 are brought into contact with each other. The air flow generated using the fan included in the lower end portion is movable through the air flow path 301 generated in this manner. Therefore, the air flow path 301 is able to help the heat dissipation process of the pole-type base station 200.

However, the air flow path 301 is merely an embodiment. In some cases, the protrusions 310 of the support 300 and the grooves 502 and 504 in the central surfaces of the first and second communication modules 500 and 510 may be coupled to each other until the support 300 and the side faces of the first and second communication modules 500 and 510 are brought into contact with each other. In this case, the support 300 may be hollow. In addition, the heat dissipation process of the pole-type base station 200 may be performed using the hollow space inside the support 300.

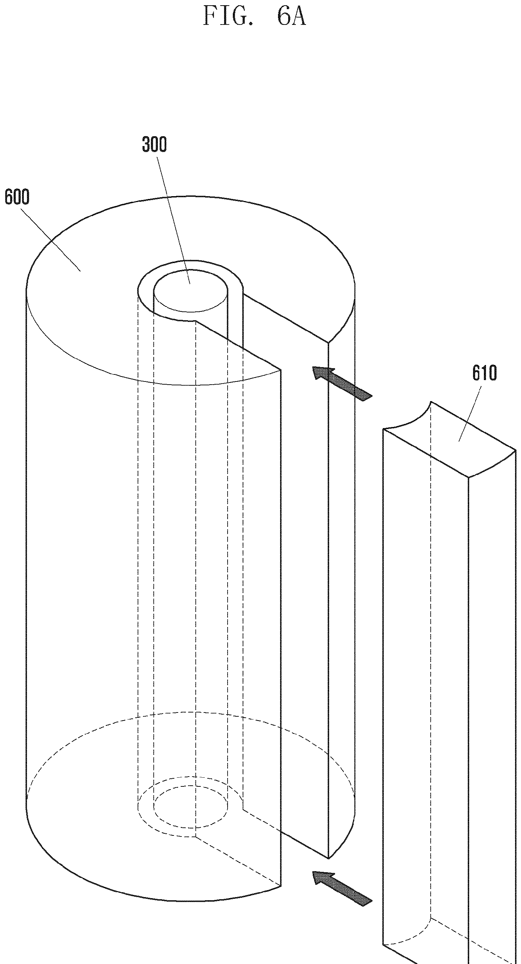

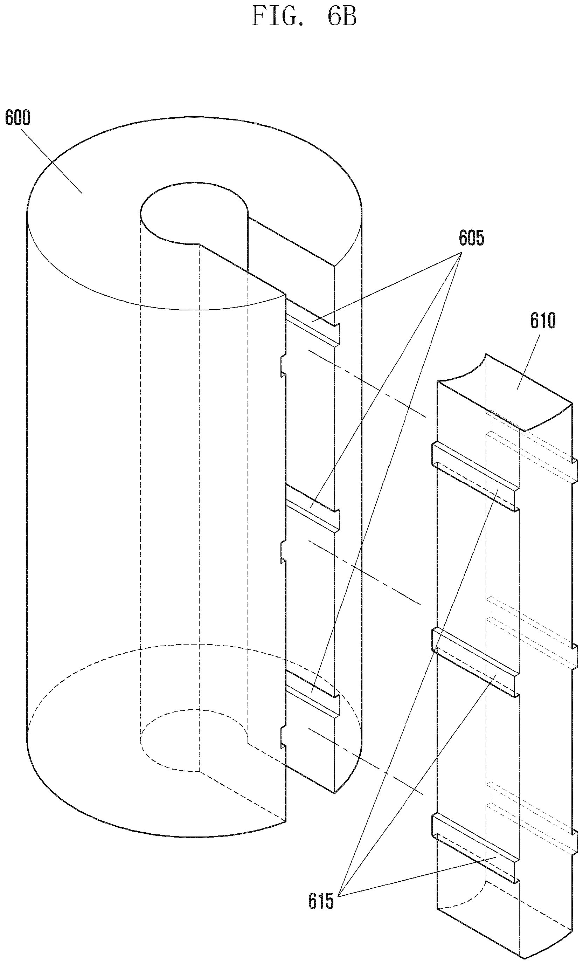

FIGS. 6A and 6B are views illustrating a structure in which a first communication module 600 and a second communication module 610 are mounted on the support 300 according to another embodiment of the disclosure.

In the above embodiment, only the first communication module 600 may be a communication module, and the second communication module 610 may be a dummy module. For example, the first communication module 600 may be any one of an AU, an RRH module, an RU, a DU, and an antenna module according to an arbitrary communication type. However, this is merely an embodiment, and both the first communication module 600 and the second communication module 610 may be any of an AU, an RRH module, an RU, a DU, and an antenna module according to an arbitrary communication type.

The first communication module 600 or the second communication module 610 may include a circuit, a wire, an element, or the like on the inner or outer side thereof depending on the functions thereof. The housings of the first communication module 600 and the second communication module 610 may be configured to be integrated with the outside of the support 300.

For example, the first communication module 600 may have a shape obtained by removing a rectangular parallelepiped having side surfaces, the length of which corresponds to the diameter of the support 300, from a cylindrical column. Therefore, the first communication module 600 may be mounted on the support 300 through a gap formed by removing the rectangular parallelepiped. If the first communication module 600 is coupled to the support 300, it is possible to mount the second communication module 610 having the same size as the rectangular parallelepiped removed from the first communication module 600 on the support 300. The surface of each of the first communication module 600 and the second communication module 610 to be coupled to the support 300 may include grooves corresponding to the protrusions 310 on the support in position and shape.

Meanwhile, in the case in which at least one protrusion 310 of the support 300 includes a connector, the plurality of grooves 502 and 504 formed on the surface of each of the first and second communication modules 600 and 610 may also include a connector to be connected to the connector of the support 300.

In addition, the housings of the first and second communication modules 600 and 610 may be formed of a rigid material so as to be fixed while forming the outer wall of the pole-type base station 200. However, a circuit, a wire, an element, and the like inserted into the housing may be formed of a material. Alternatively, the circuit, wiring, element, and the like may have a shape corresponding to the shape of the housing.

According to another embodiment of the disclosure, as illustrated in FIG. 6B, the first communication module 600 and the second communication module 610 may include grooves 605 and protrusions 615 on the surfaces thereof, which are to be in contact with each other. For example, the first communication module 600 and the second communication module 610 may include grooves 605 and protrusions 615, each of which has a rectangular parallelepiped shape having a horizontal length longer than a vertical length, on the surfaces thereof, which are to be in contact with each other, such that the second communication module 610 is able to be coupled by being introduced into the gap in the first communication module.

In addition, an air flow path may be formed between the support 300 and the first or second communication module 600 or 610. For example, the protrusions 310 of the support 300 and the grooves 504 included in the surfaces of the first and second communication modules 600 and 610, which face the surface of the support 300, may be coupled to each other only before the support 300 and the surfaces of the first and second communication modules 600 and 610 are brought into contact with each other. The air flow generated using the fan included in the lower end portion is movable through the air flow path generated in this manner. Therefore, the air flow path is able to help the heat dissipation process of the pole-type base station 200.

However, the air flow path 301 is merely an embodiment. In some cases, the protrusions 310 of the support 300 and the grooves in the first and second communication modules 600 and 610 may be coupled to each other until the support 300 and the side faces of the first and second communication modules 600 and 610 are brought into contact with each other. In this case, the support 300 may be hollow. In addition, the heat dissipation process of the pole-type base station 200 may be performed using the hollow space inside the support 300.

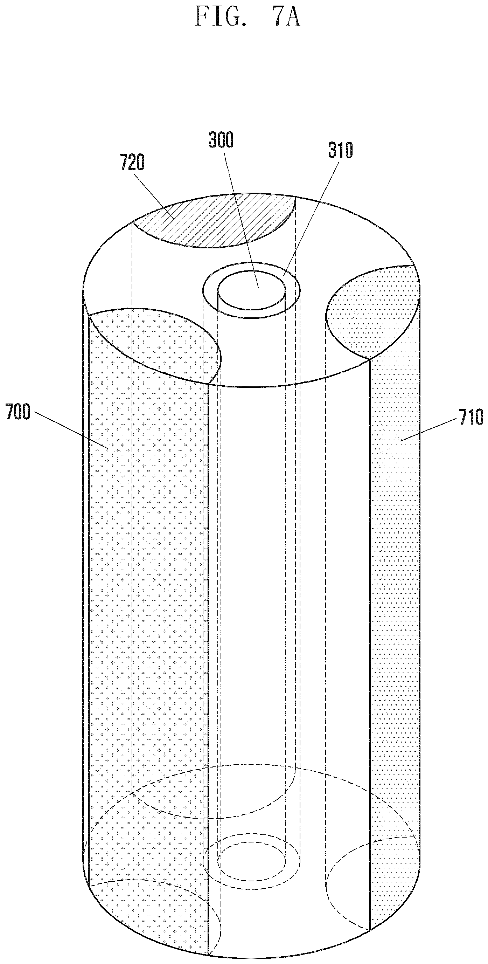

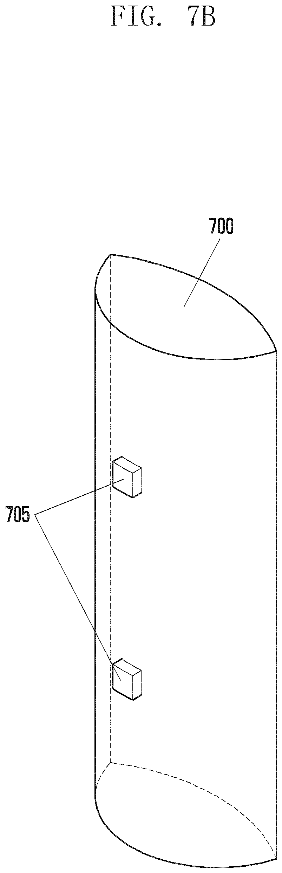

FIGS. 7A and 7B are views illustrating a structure in which first to third communication modules 700 are mounted on the support 300 according to another embodiment of the disclosure.

In order to be coupled as illustrated in FIG. 7A, the support 300 may be implemented in the form in which spaces are provided such that a plurality of columnar communication modules are able to be coupled to the spaces, respectively. An air flow path 301 may be formed in the central portion of the support 300. The air flow generated using the fan included in the lower end portion is movable through the air flow path 301. Therefore, the air flow path 301 is able to help the heat dissipation process of the pole-type base station 200.

In addition, the inner wall of the space may include protrusions for mounting the columnar communication modules. In addition, the columnar communication modules 700, 710, and 720 may be mounted in the space at corresponding positions, respectively. The communication modules 700, 710, and 720 may be any of an AU, an RRH module, an RU, a DU, and an antenna module according to an arbitrary communication type. The communication modules 700, 710, and 720 may include a circuit, a wire, an element, or the like on the inner or outer side thereof depending on the functions thereof. The housings of the communication modules 700, 710, and 720 may be configured to be integrated with the outside of the support 300.

In addition, the communication modules 700, 710, and 720 may include at least one groove at a position corresponding to the position of at least one protrusion of the support 300. Specifically, as illustrated in FIG. 7B, an arbitrary communication module 700 may include a plurality of grooves 705, which correspond to the protrusions of the support 300 in position and shape.

Meanwhile, in the case in which at least one protrusion 310 of the support 300 includes a connector, the plurality of grooves 705 may also include a connector to be connected to the connector of the support 300.

In addition, the housings of the communication modules 700, 710, and 720 may be formed of a rigid material so as to be fixed while forming the outer wall of the pole-type base station 200. However, a circuit, a wire, an element, and the like inserted into the housing may be formed of a material. Alternatively, the circuit, wiring, element, and the like may have a shape corresponding to the shape of the housing.

The plurality of communication modules 700, 710, and 720 may be fixed by the force of the communication modules to the support 300. According to an additional embodiment, a fastening unit connecting the plurality of communication modules 700, 710, and 720 to each other on the outer sides thereof may be further included. For example, the plurality of communication modules 700, 710, and 720 may be mounted on the support 300, and the outer sides of the housings of the plurality of communication modules 700, 710, and 720 may be further connected to each other.

Meanwhile, at least one of the plurality of sub-communication modules 700, 710, and 720 may be a dummy module. For example, in the case in which only an RRH module and a 4G antenna module are coupled to the support 300, configuration modules 700 and 710 may be the RRH module and the 4G antenna modules, respectively, and configuration module 720 may be a dummy module. The dummy module may be changed to another module, such as an RRH module, a 4G antenna module, or a 5G antenna module, depending on a structure change, additional necessity, and the like.

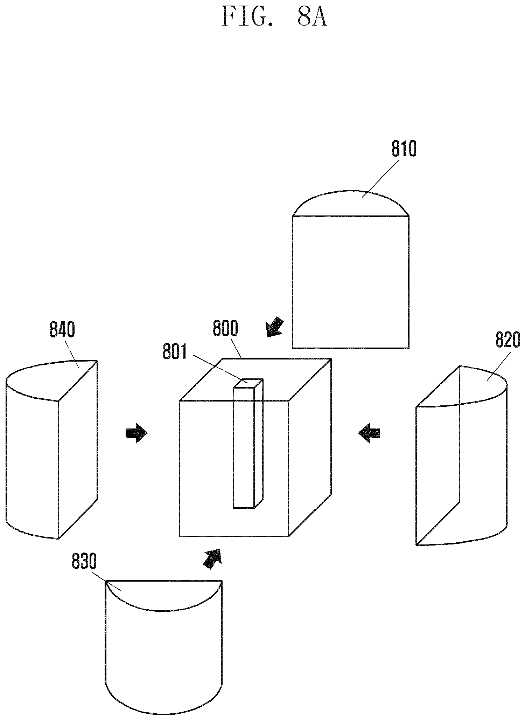

FIGS. 8A to 8C are views illustrating a structure in which first to fourth sub-communication modules 810, 820, 830, and 840 are mounted on a support 800 having a rectangular parallelepiped shape according to still another embodiment of the disclosure.

Specifically, FIG. 8A is a view illustrating a part of the support 800 having a rectangular parallelepiped shape. The side surfaces of the support 800 may be configured to mount sub-communication modules thereon. For example, the side surfaces of the support 800 may include grooves or protrusions to which the sub-communication modules can be coupled.

In addition, the support 800 may include an air flow path 801 for a heat dissipation action using air flow generated from a fan located in a lower end portion of the pole-type base station. Alternatively, the support 800 may include a cooling fin to increase the heat dissipation action.

A communication module may be mounted using the four side surfaces of the support 800. In this case, the communication module may include first to fourth sub- communication modules 810, 820, 830, and 840.

For example, the first sub-communication module 810 may be an AC power supply module, and the second sub-communication module 820 and the third sub-communication module 830 may be RU modules. In addition, the fourth sub-communication module 840 may be a DU module.

In the case in which the RU modules are 5G RUs, the 5G RUs may include an antenna element. Accordingly, the RU modules may be attached to a plurality of surfaces of the support 800 in consideration of the directions of providing a 5G communication service using the antenna elements. According to an embodiment, 5G RU modules each including an antenna element may be attached to all the side surfaces of the support 800.

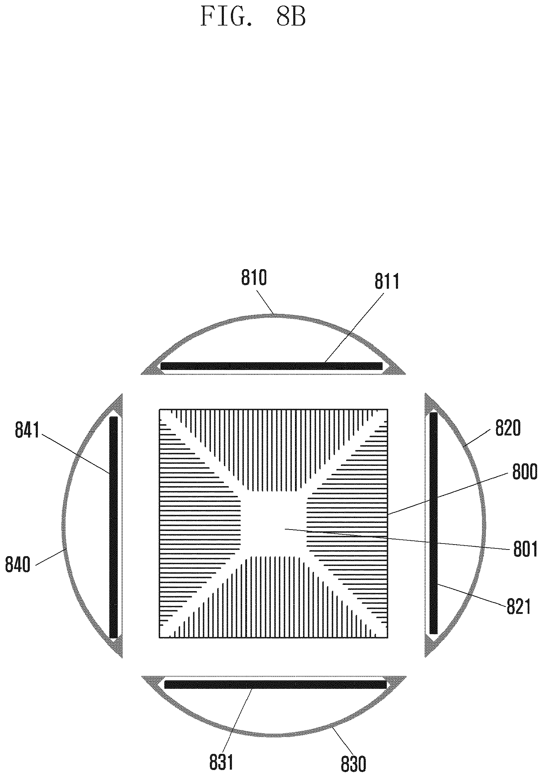

Meanwhile, referring to FIG. 8B, each of the sub-communication modules 810, 820, 830, and 840 may be implemented in a columnar shape having a bow-shaped cross section. Specifically, a portion corresponding to the arc of the bow shape is an outer housing forming a pole-type base station, and a portion corresponding to the string 811, 821, 831, or 841 of the bow shape may include a printed circuit board (PCB) according to the function of the sub-communication module.

There is no limitation on the material of the outer housings, but each of the housings of the second sub-communication module 820 and the third sub-communication module 830 each including the 5G RU may be formed as a radome. The radome may mean a dome-shaped structure for protecting and accommodating a communication antenna.

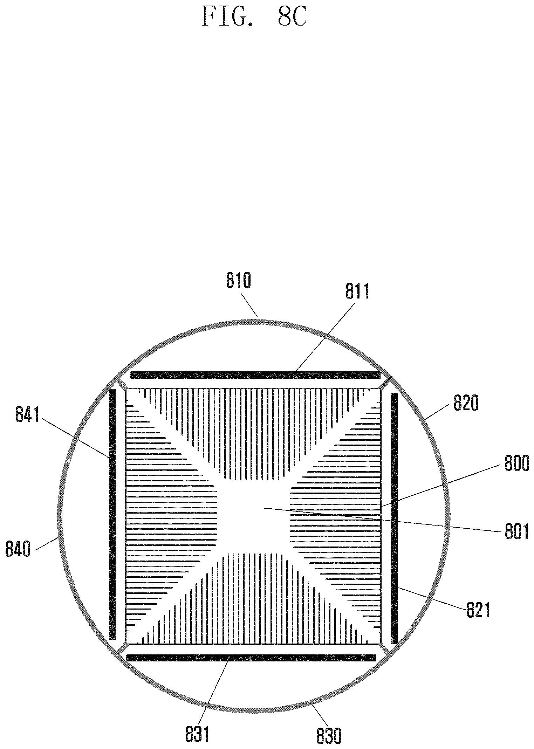

Meanwhile, FIG. 8C is a view illustrating the state in which the first to fourth sub-communication modules 810, 820, 830, and 840 are attached to all the four side surfaces of the support 800. The support 800 and all the first to fourth sub-communication modules 810, 820, 830, and 840 are attached to form a cylindrical pole-type base station. However, this is merely an embodiment, and the base station is not limited to the cylindrical pole-type base station.

In addition, the support 800 does not have four surfaces, but may have three surfaces or five or more surfaces depending on an embodiment. In addition, various types of sub-communication modules may be attached to respective surfaces of the support 800.

It is not necessary to individually use the coupling methods of the plurality of communication modules described with reference to FIGS. 3A to 8C. For example, as described above with reference to FIGS. 3A to 3D, a pole-type base station may be equipped with a communication module including three sub-communication modules on the support. However, according to another embodiment, in a pole-type base station, a communication module including three sub-communication modules may be mounted at some mounting positions of the support in the manner described with reference to FIGS. 3A to 3E, and a communication module including two sub-communication modules may be coupled to the other mounting positions in the manner described with reference to FIGS. 5A and 5B. Accordingly, it is possible to mount a plurality of communication modules through various mounting methods in a single pole-type base station.

As described above, a pole-type base station of the disclosure may be assembled in the form of a block around a support.

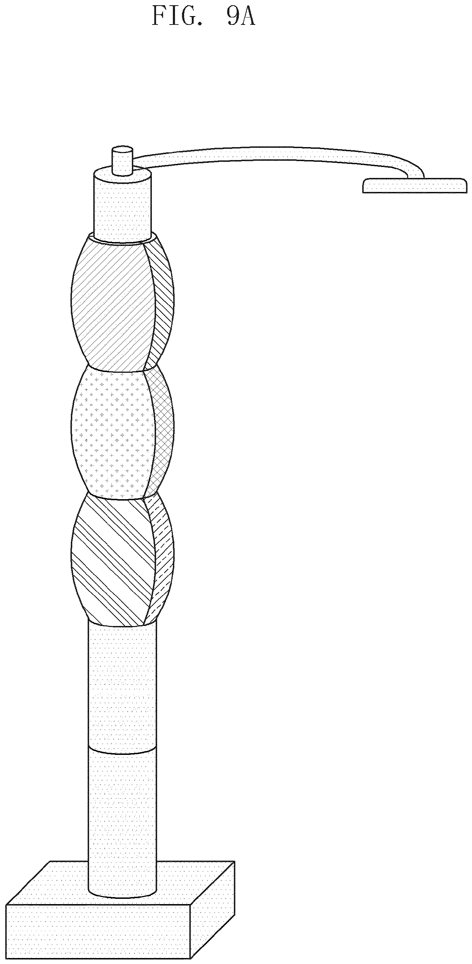

Meanwhile, FIGS. 9A to 9C are views illustrating configurations of pole-type base stations according to various embodiments of the disclosure. Embodiments in which the pole-type base station becomes a cylindrical shape in the case in communication modules, a dummy module, a support module, and the like are all mounted have been described above. For example, the pole-type base station may be equipped with various modules and may become a cylindrical structure such as a utility pole or a light pole.

However, the shape of the pole-type base station is not limited. For example, the external appearances of communication modules may be configured variously in consideration of characteristics (antenna installation, heat generation, board volume, etc.) of the internal board of each of the 4G, 5G, and small cell communication modules.

Specifically, referring to FIGS. 9A to 9C, various types of deformable pole-type base stations are disclosed. The communication modules of pole-type base stations may be implemented in various shapes for aesthetic or design reasons or depending on the sizes of the communication modules. A pole-type base station may include any modified shape that provides an integral shape and feeling through the outer shapes of the respective communication modules.

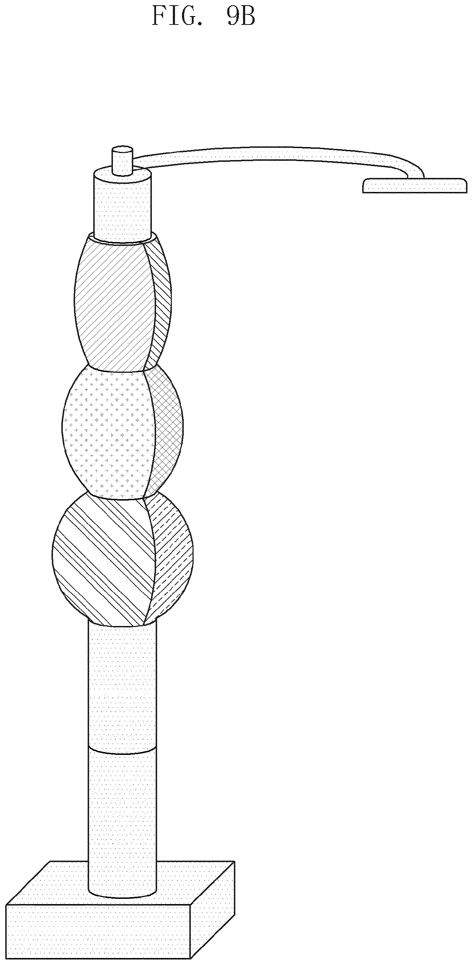

For example, as illustrated in FIGS. 9A and 9B, the housings (or outer shapes) of the communication modules may be formed in a shape other than a cylindrical shape for aesthetic reasons.

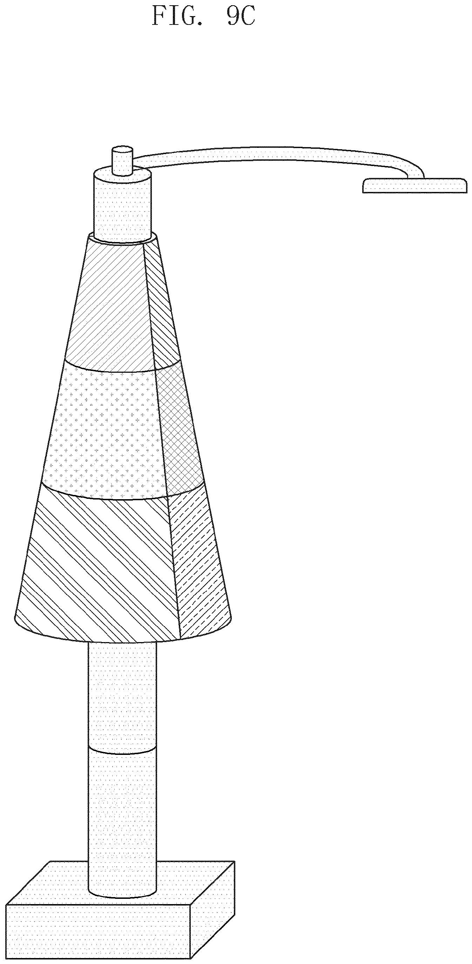

Alternatively, depending on the size of the plurality of communication modules, the housings of the communication modules may be made different. Specifically, the case in which an antenna module, a first communication module according to a first communication system, and the second communication module according to a second communication system are sequentially mounted from the upper end of the pole-type base station will be described by way of an example. If the antenna module is the smallest and the sizes of the communication module increases in the order of the first communication module and the second communication module due to the difference in size and quantity of circuits, wires, and components inside the modules, the antenna module, the first communication module, and the second communication module may be disposed in the form illustrated in FIGS. 9B and 9C.

For example, FIG. 9B illustrates the state in which three communication modules are sequentially mounted from the upper end of the pole-type base station. In this case, the communication modules will be sequentially referred to as a first communication module, a second communication module, and a third communication module from the communication module mounted on the uppermost end. The cross-sectional area of the housing (or the outer shape) of the first communication module may gradually increase downwards with respect to the uppermost cross-sectional area of the first communication module and may then decrease such that the lowermost cross-sectional area becomes equal to the uppermost cross-sectional area. In the case of the second communication module mounted below the first communication module, the cross-sectional area of the second communication module may gradually increase downwards with reference to the uppermost cross-sectional area of the second communication module and may then decrease downwards as the cross-sectional area progresses such that the lowermost cross-sectional area becomes equal to the uppermost cross-sectional area. However, in this case, the increase and decrease rates in cross-sectional area may be larger in the case of the second communication module than in the case of the first communication module.

The same is also true in the case of the third communication module, and thus a detailed description will be omitted.

In addition, FIG. 9C illustrates the state in which three communication modules are sequentially mounted from the upper end of a pole-type base station.

The cross-sectional area of the housing (or the outer shape) of the first communication module may gradually increase downwards with respect to the uppermost cross-sectional area of the first communication module. In the case of the second communication module mounted below the first communication module, the uppermost cross-sectional area of the second communication module may be the same as the lowermost cross-sectional area of the first communication module. In addition, the cross-sectional area of the second communication module may gradually increase downwards. In this case, the increase rate in cross-sectional area in the first communication module and the increase rate in cross-sectional area in the second communication module may be the same or different.

The same is also true in the case of the third communication module, and thus a detailed description will be omitted.

Meanwhile, a pole-type base station may be installed not only in a structure such as a light pole or a utility pole, but also in all structures generally available in living environments. For example, a pole-type base station may also be mounted on a structure such as a road sign and a traffic light through the above-described methods. Alternatively, a pole-type base station may be mounted on a clock tower or a guide plate installed in a park, a square, or the like.

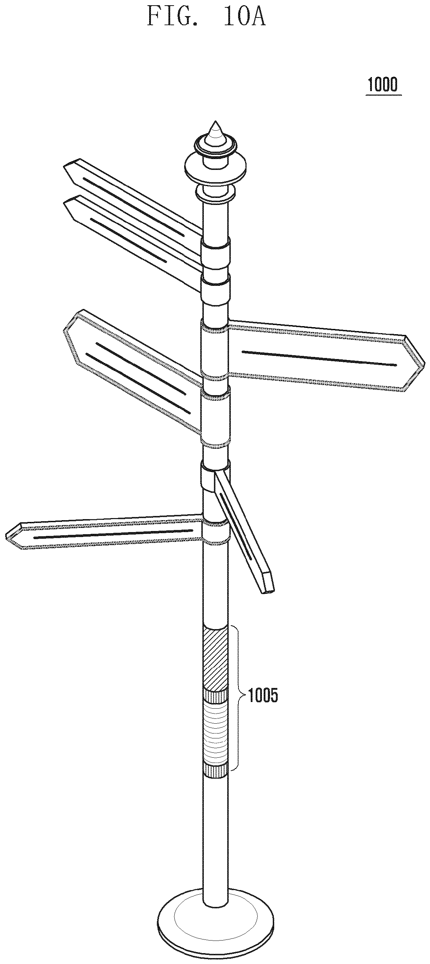

FIGS. 10A to 10C are views illustrating configurations of pole-type base stations according to various embodiments of the disclosure. As described above, the pole-type base stations may have various structures such as a traffic light, a traffic sign, a road sign, and a clock tower, in addition to a light pole, a utility pole, and the like.

For example, as illustrated in FIG. 10A, a road sign 1000 has generally used sign boards attached to the upper portion thereof, and communication modules 1005 may be mounted on a portion below sign boards. In FIG. 10A, the communication modules 1005 are located below the sign boards, but the disclosure is not limited thereto. For example, the communication modules 1005 may be positioned above the sign boards. Alternatively, the sign boards and communication modules 1005 may alternately be located.

As described above, a power supply, a communication connection device, or the like may be included in the lower end portion of the road sign 1000. The column of the road sign 1000 may serve as a support.

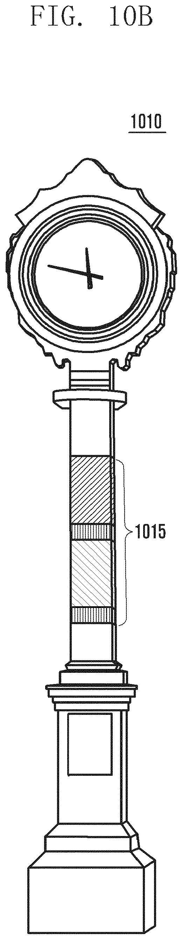

FIG. 10B is a view illustrating a pole-type base station according to another embodiment of the disclosure, which is included in a clock tower 1010. In this case, a general clock module is attached to the upper portion of the clock tower 1010, and communication modules 1015 may be mounted below the lower portion of the clock module. As described above, a power supply, a communication connection device, or the like may be included in the lower end portion of the road sign 1010. The column of the clock tower 1010 may serve as a support.

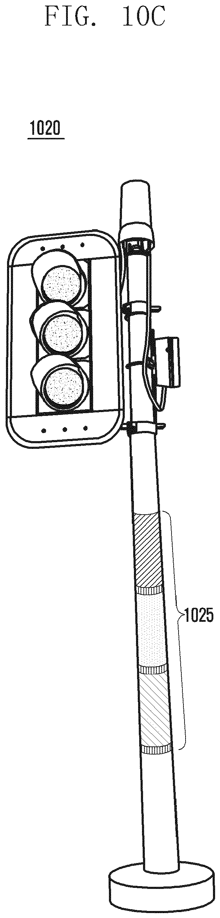

FIG. 10C is a view illustrating a pole-type base station according to another embodiment, which is included in the traffic light 1020. The traffic lamp 1020 may include a signal lamp for a vehicle, a signal lamp for a pedestrian, and the like. Although FIG. 10C exemplifies a vertical traffic lamp. However, the traffic lamp is not necessarily limited thereto, but may be applied to a horizontal traffic lamp. In this case, a general signal lamp is attached to the upper portion of the traffic lamp 1020, and communication modules 1025 may be mounted below the lower portion of the signal lamp. As described above, a power supply, a communication connection device, or the like may be included in the lower end portion of the traffic lamp 1020. The column of the traffic lamp 1020 may serve as a support.

In addition to the pole-type base stations illustrated in FIGS. 10A to 10C, there may be any other types of pole-type base stations in which communication modules can be mounted in the above-described methods.

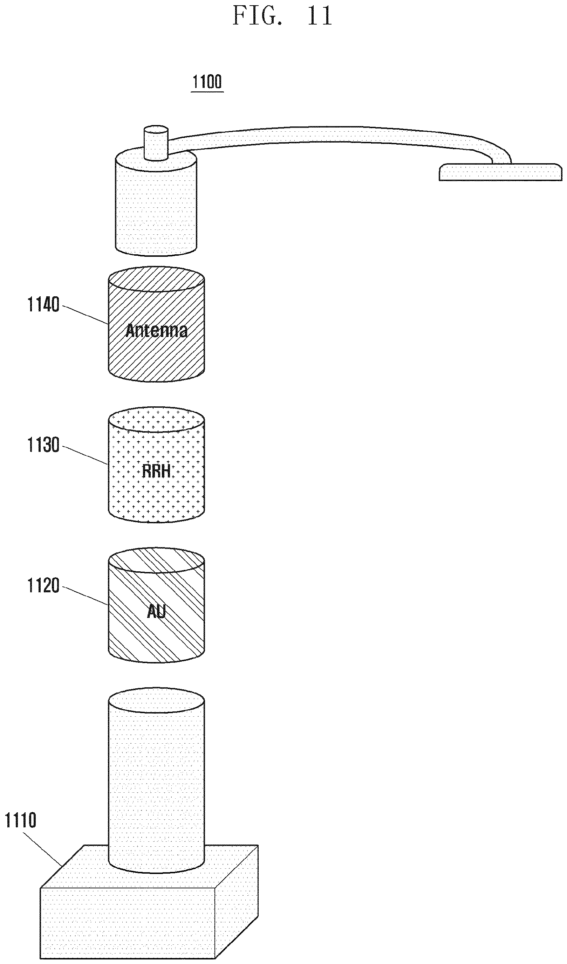

Meanwhile, FIG. 11 is a view illustrating an embodiment in which a communication module of a pole-type base station 1100 is mounted in a screw-on manner according to another embodiment of the disclosure. The pole-type base station 1100 may include a lower end portion 1110 and a plurality of communication modules 1120, 1130, and 1140.

First, the pole-type base station 1100 may include a lower end portion 1110 located at the lowermost end. For example, the pole-type base station 1100 may include a relatively heavy lower end portion 1110 in order to mount the pole on the ground, a building, or the like. The lower end portion 1100 generally serves to fix the pole to the ground. Thus, the lower end portion 1100 may include components of the base station that are essentially necessary and may not be frequently replaced.

For example, the lower end portion 1100 may include a power supply including a rectifier. The rectifier is an element or device that performs a rectifying operation to obtain DC power from AC power, and is able to perform a function of passing current in only one direction.

The power supply is a device for supplying power to the pole-type base station 1100. The power supply may supply power to all of a communication module, a light-emitting unit, and the like, which are capable of being coupled to the pole-type base station 1100. For example, the power supply may supply power to the communication module through at least one connector among one or more connectors.

In an embodiment illustrated in FIG. 11, the lower end portion 1110 may include a connector on a surface to be in contact with a communication module thereabove. In addition, each communication module mounted on the pole-type base station 1100 may include at least one connector. Thus, if a communication module is mounted on the lower end portion 1110, the connectors may be connected to each other.

In addition, the lower end portion 1110 may include a fan. The fan is a component for a heat dissipation process of the communication modules mounted on the pole-type base station 1100. In this case, the communication modules may include a hollow space. Therefore, it is possible to perform the heat dissipation process of the pole-type base station 1100 using the fan.

In addition, the lower end portion 1110 may further include a communication connection device that connects the communication module and a backhaul such that the communication module is capable of communicating with the backhaul through another connector among the one or more connectors. The communication connection device may include a switch, a router, a hub, and the like.

The configuration in which the lower end portion 1110 includes a power supply unit, a fan, and a communication connection device is merely an embodiment, and the lower end portion 1110 may include different components depending on the function and structure of the pole-type base station 1100.

At least one communication module may be coupled to the upper end of the lower end portion 1110 of the pole-type base station 1100 in a screw-on manner. For example, an access unit (AU) 1120, a remote radio head (RRH) module 1130, and an antenna module 1140 for performing communication by at least one communication type are sequentially coupled in a screw-on manner.

The AU 1120 is a component for performing a radio signal transmission/reception function, a modulation/demodulation function for packet traffic, and a hybrid automatic repeat request (HARQ) or ARQ processing function. For example, a 5G AU module may exist between a terminal and a core unit (CU), and may be wirelessly connected to a customer premises equipment (CPE) to process a packet call according to the 5G air standard.

The RRH module 1130 is a component including a radio frequency network, an analog-digital/digital-analog converter, and an up/down converter to process signals in a radio transmission/reception band.

In addition, the antenna module 1140 may include an antenna according to at least one communication type. For example, the antenna module 1140 may be divided into three sectors such that two 4G antennas and one 5G antenna may be coupled to the antenna module 1140. However, this is merely an embodiment, and the antenna module may be three 4G antennas or three 5G antennas divided into three sectors. Alternatively, in the case in which an internal-type antenna is used, the antenna module 1140 may be omitted.

However, the pole-type base station 1100 may be implemented as a light pole or a utility pole, and thus a height over a predetermined length may be required. In this case, if some modules are omitted, a dummy module that does not perform any function may be coupled. If necessary, the dummy module may be removed, and a communication module may be further attached.

In addition, in the case in which the pole-type base station 1100 is a light pole, it may further include a light-emitting unit. In the case in which the pole-type base station 1100 is a utility pole, a structure for connection with a wire or a communication line may be further included.

If various types of pole-type base stations as described above are used, there are advantages in that the configuration included in the base station can be easily changed, and in that re-installation and maintenance can be easily performed.

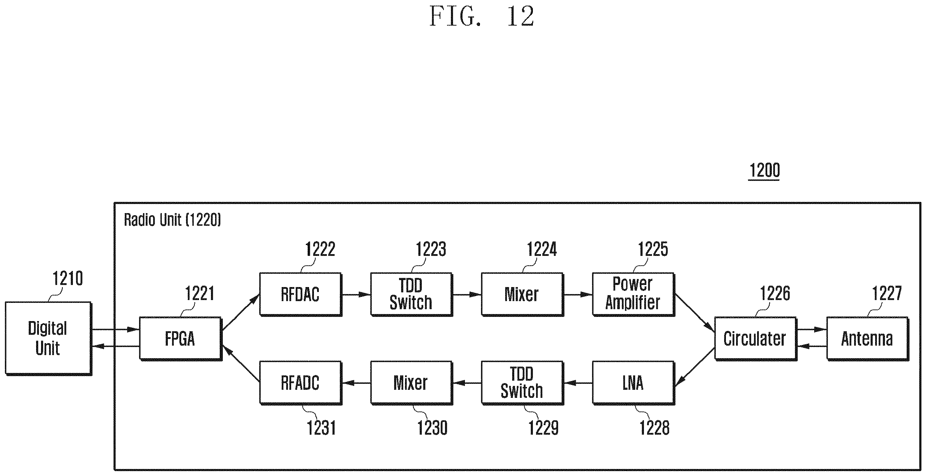

Meanwhile, FIG. 12 is a block diagram illustrating the structure of an access unit (AU) 1200 including a DU 1210 and an RU 1220 of a pole-type base station according to an embodiment of the disclosure. Particularly, the block diagram of FIG. 12 specifically illustrates the structure of the AU 1200 according to an LTE communication system.

The AU 1200 is a system existing between a core unit (CU) of a base station and a terminal. In the case of a 5G communication system, the AU 1200 may be wirelessly connected with a customer premises equipment (CPE) according to the 5G Air Standard to process a packet call.

The DU 1210 is a component for processing signals in a baseband region.

Referring to a path through which a pole-type base station transmits a signal in detail, user data received from the CU of the base station through the backhaul may be transmitted to the DU 1210 after passing through a network matching module. The user data transmitted to the DU 1210 may be configured in the form of a CPRI interface after being subjected to baseband level digital processing, and may then be converted into an optical signal using an electrical-to-optic (E/O) conversion. The converted optical signal may be transmitted to the RU 1220 through an optical cable.

The RU 1220 may convert the received optical signal into an optic-to-electrical (O/E) signal. The converted wideband baseband signal may be converted into an analog signal. Then, the analog signal may be transmitted through an antenna after passing through a power amplifier and a filter unit.

Specifically, an FPGA 1221 of the RU 1220 may perform a CPRI deframing process on a signal received from the DU 1210 and may transmit the processed signal to an RFDAC 1222. The RFDAC 1222 is an RF digital-to-analog converter, which is capable of up-converting an input digital signal to an analog signal and an RF frequency. In addition, a TDD switch 1223 may turn on a transmitted signal and transmit the signal to a mixer 1224 and a power amplifier (PA) 1225. In addition, the TDD switch 1223 may turn off an RF reception signal. The PA 1225 may receive a signal up-converted to a transmission millimeter frequency in the mixer 1224, may perform power amplification on the up-converted signal, and may transmit the amplified signal to a circulator 1226. The circulator 1226 may transmit the millimeter transmission signal to an antenna 1227. The antenna 1227 may transmit a transmission signal.

Meanwhile, in the case in which the pole-type base station receives a signal, if an RF signal is received at the antenna 1227, the received signal may be transmitted to an LNA 1228 through the circulator 1226 of the RU 1220. Then, the signal may be subjected to low noise amplification through the LNA 1228. The amplified signal may turn on an RF signal at the TDD switch 1229, may transmit the signal to the mixer 1230 and an RFADC 1231, and may turn off the RF transmission signal.

The mixer 1230 may down-convert the millimeter signal received from the LNA 1228 into a reception RF signal. For example, the mixer 1230 may convert the millimeter signal into a baseband signal through RF down-conversion and digital down-conversion.

The converted reception signal may be transmitted to the RFADC 1231. Then, the RFADC 1231 may receive an RF frequency signal from the RF analog-to-digital converter, and may convert the RF frequency signal into a digital signal.

When the converted digital signal is delivered to the FPGA 1221, the FPGA 1221 may perform a CPRI framing process on the received signal and transmit processed signal to the DU 1210. For example, the converted digital signal is configured in the form of a CPRI interface, and may be subjected to electrical-to-optic (E/O) conversion again. The converted signal is transmitted to the DU 1210.

A modem unit included in the DU 1210 may convert data, which has been subjected to a baseband signal processing process, into a 10G/1G Ethernet frame, and may transmit the 10G/1G Ethernet frame to the CU via a GE/GE.

As described above, a transmission signal and a reception signal may be processed along separate paths in the base station. However, this is merely an embodiment, and a transmission signal and a reception signal may be processed in the same path. For example, during RF signal transmission using the TDD switch described above, the TDD switch may turn on the RF transmission signal and turn off the RF reception signal to process the transmission signal. On the contrary, during RF signal reception, the TDD switch may turn off the RF reception signal and turn on the RF reception signal to process the reception signal.

The DU 1210 and the RU 1220 may be included in different communication modules, respectively. For example, in the case in which two communication modules are mounted on the support, the RU 1220 may be located in the upper communication module and the DU 1210 may be located in the lower communication module. In this case, the upper communication module and the lower communication module may be connected to each other through a connector included in the support. Alternatively, the upper communication module and the lower communication module may be directly connected to each other through a connector provided therebetween.

In addition, according to another embodiment of the disclosure, components other than the antenna 1227 of the RU 1220 may be included in one communication module, and the antenna 1227 may be included in the other communication module. Referring to the example described above, the antenna 1227 may be located in the upper communication module, and the DU 1210 and the components of the RU other than the antenna 1227 may be located in the lower communication module.

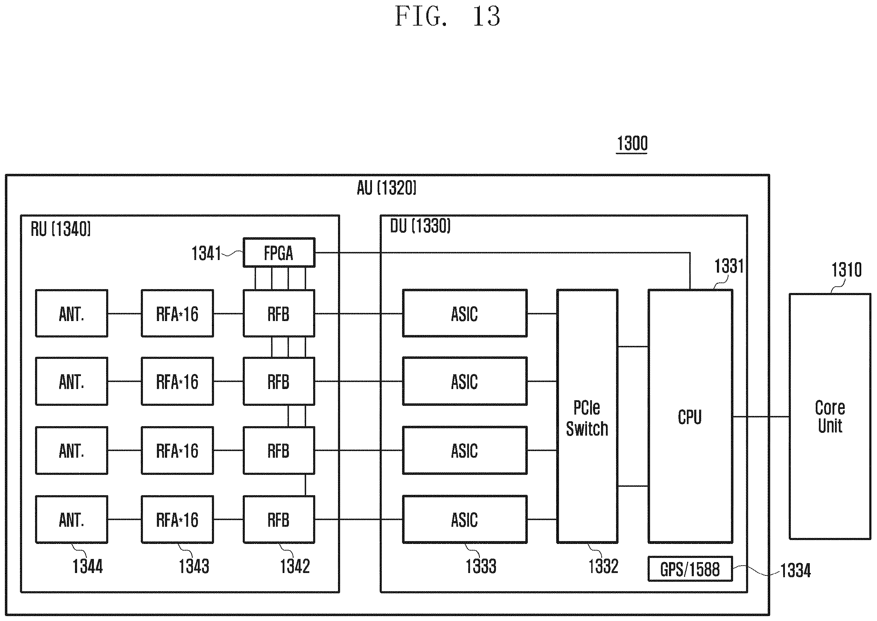

Meanwhile, FIG. 13 is a block diagram of a pole-type base station 1300 including a core unit (CU) 1310 and an access unit (AU) 1320, according to another embodiment of the disclosure. The AU 1320 may include a DU 1330 and an RU 1340. Particularly, the block diagram of FIG. 13 specifically illustrates the structure of the pole-type base station 1300 according to a 5G communication system.

First, the DU 1330 of the AU 1320 may include a CPU 1331, a PCIe switch 1332, an ASIC 1333, and a GPS/1588 1334.

A digital-to-analog converter (DAC) and an analog-to-digital converter (ADC) may be embedded in the ASIC 1333.

In addition, the RU 1340 may include an FPGA 1341, an RFB 1342, an RFA 1343, and an antenna 1344.

The RFB 1342 and the RFA 1343 may be a radio frequency integrated circuit (RFIC). The RFIC may mean that a plurality of RF blocks are integrated into a single chip.

The RFB 1342 may include a PLL, a mixer, a transmission/reception amplifier, a switch, a filter, and the like. In case of downlink, the RFB 1342 may convert a signal of a base band region into an intermediate frequency (IF) signal. Meanwhile, in the case of uplink, the RFB 1342 may convert an IF signal into a signal in the baseband region.

In addition, the RFA 1343 may include a transmission amplifier, a reception RNA, a mixer, a switch, and a phase shifter. In the case of downlink, the RFA 1343 may convert an IF signal to an mmWave signal. In the case of uplink, the RFA 1343 may convert a mmWave signal into an IF signal. In addition, the RFA 1343 may also function as a beam former.

The CU 1310 and the AU 1320 may be included in different communication modules, respectively. For example, in the case in which two communication modules are mounted on the support, the AU 1320 may be located in the upper communication module and the CU 1310 may be located in the lower communication module. In this case, the upper communication module and the lower communication module may be connected to each other through a connector included in the support. Alternatively, the upper communication module and the lower communication module may be directly connected to each other through a connector provided therebetween.

The components of the base stations described above may be implemented by software. For example, control units of a terminal and a base station may further include a flash memory or a nonvolatile memory. The nonvolatile memory may store a program for performing the role of each of the control units.

In addition, the control unit of the base station may be implemented in a form including a CPU and a random access memory (RAM). The CPU of the control unit may copy the above-described program stored in the nonvolatile memory into the RAM, and may then execute the copied program so as to perform the functions of the terminal described above.

The control unit is configured to control the base station. The control unit may be used in the same meaning as a central processing unit, a microprocessor, a processor, an operating system, or the like. In addition, the control unit of the base station may be implemented as a single chip system (a system-on-a-chip or a system-on-chip (SoC) together with other functional units such as a communication module included in the terminal.

Meanwhile, the method of the base station according to various embodiments described above may be coded as software and stored in a non-transitory readable medium. Such a non-transitory readable medium may be incorporated and used in various devices.

The non-transitory readable medium means a medium that semi-permanently stores data and is readable by an apparatus, rather than a medium that stores data for a short period of time, such as a register, a cache, or a memory. Specifically, the non-transitory readable may be a CD, a DVD, a hard disk, a Blue-ray disk, a USB, a memory card, a ROM, or the like.

Although particular exemplary embodiments of the disclosure have been illustrated and described above, it should be appreciated that the disclosure is not limited thereto. It will be apparent that various modifications and changes may be made by those skilled in the art without departing from the scope of the disclosure as defined by the appended claims, and these modifications and changes should not be construed separately from the technical idea or scope of the disclosure.

### [Reference Numeral]

200: pole-type base station 205: lower end portion
210, 300: support 220, 239, 240: a plurality of mounting positions
225, 235, 245: a plurality of connectors
250: lower support module 255: intermediate support module
256: at least one hole of intermediate support module
260: wireless backhaul 270: GPS antenna
280: light-emitting unit
301: air flow path
310: protrusion of support
315, 320, 325, 500, 510, 600, 700, 710, 720: sub-communication module
316: groove of sub-communication module
400: light pole including pole-type base station

## Claims

1. A pole-type base station (200) comprising:
a support (210; 300) including one or more connectors (225, 235, 245) and configured to perform support; and
at least one communication module having an arbitrary shape and configured to perform communication according to at least one communication type, the communication module being mounted at an arbitrary position of the support to be connected to the one or more connectors;
an air flow path for emitting heat formed between the support and the at least one communication module, the air flow path being formed as an empty space between the support and the at least one communication module; and
a fan for generating air flow for dissipating heat through the air flow path, wherein the fan is included in a lower end portion located at a lowermost end of the support,
wherein the at least one communication module forms an outer side of the pole-type base station.

2. The pole-type base station (200) of claim 1, wherein the at least one communication module is powered through any one of the one or more connectors (225, 235, 245), and performs communication with a backhaul (270) through another one of the one or more connectors.

3. The pole-type base station (200) of claim 1, wherein the lower end portion includes:
a power supply unit configured to supply power to the at least one communication module through any one of the one or more connectors (225, 235, 245); and
a communication connection device configured to connect the at least one communication module and the backhaul (270) such that the at least one communication module communicates with the backhaul through another one of the one or more connectors.

4. The pole-type base station (200) of claim 1, wherein, when the one or more communication modules are a plurality of communication modules, the plurality of communication modules are mounted on the support so as to form an integrated outer appearance with each other.

5. The pole-type base station (200) of claim 4, further comprising:
at least one intermediate support module (255) located above or below the at least one communication module, configured to support the at least one communication module to be mounted on the support (210; 300), and includes at least one hole (256) for dissipating heat.

6. The pole-type base station (200) of claim 5, further comprising:
at least one lower support module (250) located below the at least one communication module, the lower support module having a height longer than a height of the intermediate support module (255).

7. The poly-type base station (200) of claim 5 or claim 6, wherein the at least one intermediate support module (255) or the lower support module (250) is hollow.

8. The pole-type base station (200) of claim 1, wherein the at least one communication module includes one or more sub-communication modules (315, 320, 325, 500, 510, 600, 700, 710, 720), and each of the sub-communication modules performs communication with a node located in a region in a predetermined direction.

9. The pole-type base station (200) of claim 8, wherein, when the one or more communication modules are a plurality of communication modules (700, 710, 720), each of the sub-communication modules (315, 320, 325, 500, 510, 600, 700, 710, 720) includes a fastening portion such that the sub-communication modules are coupled to each other.

10. The pole-type base station (200) of claim 1, wherein the at least one communication module has a cylindrical shape, and
the cylindrical shape is hollow by a volume to be occupied by the support (210; 300).

11. The pole-type base station (200) of claim 1, wherein the at least one communication module includes:
a digital unit, DU, configured to process a signal in a baseband;
a remote radio head, RRH, configured to convert the signal processed in the baseband into a signal in a communication band; and
an antenna (270).

12. The pole-type base station (200) of claim 1, wherein the at least one communication module includes one or more connectors (225, 235, 245) to be connected to the one or more connectors provided on the support (210; 300).

## Patentansprüche

1. Mastartige Basisstation (200), umfassend:
einen Träger (210; 300), der einen oder mehrere Verbinder (225, 235, 245) enthält und so konfiguriert ist, dass er eine Stützfunktion ausübt; und
mindestens ein Kommunikationsmodul, das eine beliebige Form hat und konfiguriert ist, um eine Kommunikation gemäß mindestens einem Kommunikationstyp durchzuführen, wobei das Kommunikationsmodul an einer beliebigen Position des Trägers angebracht ist, um mit dem einen oder den mehreren Verbindern verbunden zu werden,
einen zwischen dem Träger und dem mindestens einen Kommunikationsmodul ausgebildeten Luftströmungsweg zur Wärmeabgabe, wobei der Luftströmungspfad als Leerraum zwischen dem Träger und dem mindestens einen Kommunikationsmodul ausgebildet ist, und
ein Gebläse zum Erzeugen eines Luftstroms zum Abführen von Wärme durch den Luftströmungspfad, wobei das Gebläse in einem unteren Endabschnitt enthalten ist, der sich an einem untersten Ende des Trägers befindet,
wobei das mindestens eine Kommunikationsmodul eine Außenseite der mastartigen Basisstation bildet.

2. Mastartige Basisstation (200) nach Anspruch 1, wobei das mindestens eine Kommunikationsmodul über einen des einen oder der mehreren Verbinder (225, 235, 245) mit Strom versorgt wird und über einen anderen des einen oder der mehreren Verbinder eine Kommunikation mit einem Backhaul (270) durchführt.

3. Mastartige Basisstation (200) nach Anspruch 1, wobei der untere Endabschnitt umfasst:
eine Stromversorgungseinheit, die so konfiguriert ist, dass sie das mindestens eine Kommunikationsmodul über einen beliebigen des ein oder der mehreren Verbinder (225, 235, 245) mit Strom versorgt; und
eine Kommunikationsverbindungsvorrichtung, die konfiguriert ist, um das mindestens eine Kommunikationsmodul und das Backhaul (270) so zu verbinden, dass das mindestens eine Kommunikationsmodul mit dem Backhaul über einen anderen des einen oder der mehreren Verbinder kommuniziert.

4. Mastartige Basisstation (200) nach Anspruch 1, wobei, wenn es sich bei dem einen oder den mehreren Kommunikationsmodulen um eine Vielzahl von Kommunikationsmodulen handelt, die Vielzahl von Kommunikationsmodulen auf dem Träger so angebracht ist, dass sie ein integriertes äußeres Erscheinungsbild miteinander bilden.

5. Mastartige Basisstation (200) nach Anspruch 4, die ferner Folgendes umfasst:
mindestens ein Zwischenträgermodul (255), das sich oberhalb oder unterhalb des mindestens einen Kommunikationsmoduls befindet und so konfiguriert ist, dass es das mindestens eine Kommunikationsmodul trägt, das auf dem Träger (210; 300) montiert werden soll, und mindestens ein Loch (256) zur Wärmeabführung aufweist.

6. Mastartige Basisstation (200) nach Anspruch 5, die ferner Folgendes umfasst:
mindestens ein unteres Trägermodul (250), das sich unterhalb des mindestens einen Kommunikationsmoduls befindet, wobei das untere Trägermodul eine Höhe aufweist, die länger ist als die Höhe des Zwischenträgermoduls (255).

7. Mastartige Basisstation (200) nach Anspruch 5 oder Anspruch 6, wobei das mindestens eine Zwischenträgermodul (255) oder das untere Trägermodul (250) hohl ist.

8. Mastartige Basisstation (200) nach Anspruch 1, wobei das mindestens eine Kommunikationsmodul ein oder mehrere Unterkommunikationsmodule (315, 320, 325, 500, 510, 600, 700, 710, 720) umfasst und jedes der Unterkommunikationsmodule eine Kommunikation mit einem Knoten durchführt, der sich in einem Bereich in einer vorbestimmten Richtung befindet.

9. Mastartige Basisstation (200) nach Anspruch 8, wobei, wenn es sich bei dem einen oder den mehreren Kommunikationsmodulen um eine Vielzahl von Kommunikationsmodulen (700, 710, 720) handelt, jedes der Unterkommunikationsmodule (315, 320, 325, 500, 510, 600, 700, 710, 720) einen Befestigungsabschnitt aufweist, so dass die Unterkommunikationsmodule miteinander gekoppelt sind.

10. Mastartige Basisstation (200) nach Anspruch 1, wobei das mindestens eine Kommunikationsmodul eine zylindrische Form hat, und
die zylindrische Form durch ein Volumen ausgehöhlt ist, das von dem Träger (210; 300) eingenommen werden soll.

11. Mastartige Basisstation (200) nach Anspruch 1, wobei das mindestens eine Kommunikationsmodul umfasst:
eine digitale Einheit, DU, die konfiguriert ist zur Verarbeitung eines Signals in einem Basisband;
einen Remote-Radio-Head, RRH, der so konfiguriert ist, dass er das im Basisband verarbeitete Signal in ein Signal in einem Kommunikationsband umwandelt; und
eine Antenne (270).

12. Mastartige Basisstation (200) nach Anspruch 1, wobei das mindestens eine Kommunikationsmodul einen oder mehrere Verbinder (225, 235, 245) enthält, die mit dem einen oder den mehreren Verbindern verbunden werden, die auf dem Träger (210; 300) vorgesehen sind.

## Revendications

1. Station de base de type poteau (200) comprenant :
un support (210 ; 300) comprenant un ou plusieurs connecteurs (225, 235, 245) et configuré pour effectuer le support ; et
au moins un module de communication ayant une forme arbitraire et configuré pour effectuer une communication selon au moins un type de communication, le module de communication étant monté à une position arbitraire du support pour être connecté à un ou plusieurs connecteurs ;
un chemin d'écoulement d'air pour l'émission de chaleur formé entre le support et l'au moins un module de communication, le chemin d'écoulement d'air étant formé comme un espace vide entre le support et l'au moins un module de communication ; et
un ventilateur pour générer un flux d'air afin de dissiper la chaleur à travers le chemin d'écoulement d'air, le ventilateur étant inclus dans une partie d'extrémité inférieure située à l'extrémité la plus basse du support,
dans lequel l'au moins un module de communication forme un côté extérieur de la station de base de type poteau.

2. Station de base de type poteau (200) de la revendication 1, dans laquelle l'au moins un module de communication est alimenté par l'un quelconque de l'un ou des plusieurs connecteurs (225, 235, 245) et communique avec un backhaul (270) par l'intermédiaire d'un autre de l'un ou des plusieurs connecteurs.

3. Station de base de type poteau (200) de la revendication 1, dans laquelle la partie d'extrémité inférieure comprend :
une unité d'alimentation électrique configurée pour alimenter l'au moins un module de communication par l'intermédiaire de l'un quelconque de l'un ou des plusieurs connecteurs (225, 235, 245) ; et
un dispositif de connexion de communication configuré pour connecter l'au moins un module de communication et le backhaul (270) de sorte que l'au moins un module de communication communique avec le backhaul par l'intermédiaire d'un autre de l'un ou des plusieurs connecteurs.

4. Station de base de type poteau (200) de la revendication 1, dans laquelle, lorsque l'un ou les plusieurs modules de communication sont une pluralité de modules de communication, la pluralité de modules de communication sont montés sur le support de manière à former un aspect extérieur intégré les uns avec les autres.

5. Station de base de type poteau (200) de la revendication 4, comprenant en outre :
au moins un module de support intermédiaire (255) situé au-dessus ou au-dessous de l'au moins un module de communication, configuré pour supporter l'au moins un module de communication à monter sur le support (210 ; 300), et comprend au moins un trou (256) pour dissiper la chaleur.

6. Station de base de type poteau (200) de la revendication 5, comprenant en outre :
au moins un module de support inférieur (250) situé sous l'au moins un module de communication, le module de support inférieur ayant une hauteur supérieure à la hauteur du module de support intermédiaire (255).

7. Station de base de type poteau (200) de la revendication 5 ou de la revendication 6, dans laquelle l'au moins un module de support intermédiaire (255) ou le module de support inférieur (250) est creux.

8. Station de base de type poteau (200) de la revendication 1, dans laquelle l'au moins un module de communication comprend un ou plusieurs sous-modules de communication (315, 320, 325, 500, 510, 600, 700, 710, 720), et chacun des sous-modules de communication effectue la communication avec un noeud situé dans une région dans une direction prédéterminée.

9. Station de base de type poteau (200) de la revendication 8, dans laquelle, lorsque l'un ou les plusieurs modules de communication sont une pluralité de modules de communication (700, 710, 720), chacun des sous-modules de communication (315, 320, 325, 500, 510, 600, 700, 710, 720) comprend une partie de fixation telle que les sous-modules de communication sont couplés l'un à l'autre.

10. Station de base de type poteau (200) de la revendication 1, dans laquelle l'au moins un module de communication a une forme cylindrique, et
la forme cylindrique est creusée par un volume à occuper par le support (210 ; 300).

11. Station de base de type poteau (200) de la revendication 1, dans laquelle l'au moins un module de communication comprend :
une unité numérique, DU, configurée pour traiter un signal en bande de base ;
une tête radio distante, RRH, configurée pour convertir le signal traité dans la bande de base en un signal dans une bande de communication ; et
une antenne (270).

12. Station de base de type poteau (200) de la revendication 1, dans laquelle l'au moins un module de communication comprend un ou plusieurs connecteurs (225, 235, 245) destinés à être connectés à l'un ou les plusieurs connecteurs prévus sur le support (210 ; 300).
